# EUROPEAN PATENT APPLICATION

(11) **EP 0 739 928 A2**
(43) Date of publication of application: **30.10.1996**
(21) Application number: 96302661.2
(22) Date of filing: 17.04.1996
(51) Int. Cl.: C08J 3/03, C08L 83/04, C08L 83/14

(54) **Crosslinked emulsions with optimum consistency and handling without thickeners**

(30) Priority: 27.04.1995 US 430776
(71) Applicant: DOW CORNING CORPORATION, Midland, Michigan 48686-0994 (US)
(72) Inventor: Joffre, Eric Jude, Midland, Michigan 48642 (US); Berg, Daniel Trent, Muskego, Wisconsin 53150 (US); Liles, Donald Taylor, Midland, Michigan 48640 (US); Marteaux, Leon Audre, 1150 Brussels (BE); Shepard, Nick Evan, Blacksburg, Virginia 24060 (US); Wolf, Andreas Thomas Franz, Midland, Michigan 48682 (US)
(74) Representative: Lewin, John Harvey

(57) **Abstract**

A crosslinked polysiloxane dispersion comprising a siloxane polymer, polymer mixture or polymer/solvent mixture, capable of crosslinking via condensation, addition or free radical reactions and having a viscosity of between 5000 and 500,000 mPa·s, if required, 0.1 to 100 weight parts of a crosslinking agent and, if required, depending on the nature of the catalyst and silicon cure system, 0.000001 to 10 weight parts of a catalyst, 0.5 to 10 weight parts of a surfactant or surfactant mixture and 0.5 to 200 weight parts water per 100 weight parts siloxane polymer. Optionally, adhesion promoters, pigments, reinforcing or non-reinforcing fillers, silicone resins, stabilizers, freeze/thaw additives and the like, may also be added to the dispersion.

## Description

This invention introduces an aqueous dispersion of crosslinked polysiloxane which does not require thickeners or other rheology controlling additives, to achieve optimum handling characteristics at solids contents above 75%. Moreover, this dispersion, upon drying, yields an elastomer with improved durometer, tensile and elongation properties.

The technical background of this invention is generally represented by: EP-A2 0 463 431; WO 94/09058; WO 94/09059; US-As 3,355,406; 4,788,001; 5,034,455; 5,037,878; 5,045,231 or 5,145,907.

Our claimed invention introduces a silicone latex and a method of producing same. The silicone latex is free of rheology modifiers, having a plurality of crosslinked polysiloxane particles, wherein said silicone latex has at least 75% silicone content by weight, said silicone latex comprising
(a) a crosslinked product of (i) 100 weight parts of a siloxane polymer or polymer mixture, having a viscosity of 5000 to 500,000 mPa·s at 25°C., and (ii) up to 100 weight parts of crosslinker, the siloxane polymer or polymer mixture having at least one polymer species of the following Formula (I):

X₃₋ₙRₙYO(R¹ ₂SiO)_{z}YRₙX₃₋ₙ

where n is 0, 1, 2 or 3 and z is an integer from 500 to 5000, X is a hydrogen atom, a vinyl group, a hydroxyl group and any condensable or hydrolyzable group, Y is a silicon atom or a Si-(CH₂)ₘ-SiR¹₂ group, where m is 1 to 8, R is individually selected from the group consisting of hydrogen atom, aliphatic, alkyl, aminoalkyl, polyaminoalkyl, epoxyalkyl, alkenyl and aromatic aryl groups and R¹ is individually selected from the group consisting of X, hydrogen atom, aliphatic, alkyl, alkenyl and aromatic aryl groups, (b) 0.5 to 10 weight parts of surfactant, (c) 0.5 to 200 weight parts of water and (d) up to 10 weight parts of catalyst.

The crosslinked polysiloxane dispersion comprises a siloxane polymer, polymer mixture or polymer/solvent mixture, capable of crosslinking by condensation, addition or free radical reactions and having a viscosity of 5000 to 500,000 mPa·s; if required, 0.1 to 100 weight parts of a crosslinking agent; and, if required, depending on the nature of the cure system, 0.000001 to 10 weight parts of a catalyst, 0.5 to 10 weight parts of a surfactant or surfactant mixture and 0.5 to 200 weight parts water per 100 weight parts of siloxane polymer. Optionally, adhesion promoters, pigments, reinforcing or non-reinforcing fillers, silicone resins, stabilizers, freeze/thaw additives and the like may also be added to our dispersion. The dispersion is produced by mixing at least the silicone polymer, surfactant and 0.5 to 200 parts by weight of water under sufficient shear and for a sufficient period of time to obtain a high solids "oil-in-water" emulsion having a characteristic clear gel phase with at least 90% polymer solids content and with particle sizes between 0.1 and 5 micrometers, preferably between 0.2 and 2 micrometers. Crosslinker and catalyst, if required, and optional further ingredients may be added directly to the high solids clear gel phase or they may be added after dilution of the clear gel with water to attain the desired solids content of at least 75% by weight. Alternatively, either crosslinker or catalyst, or both, and the further optional ingredients may be added to the mixture before emulsification into the gel phase.

In any case, it is important for this invention that a high solids gel is formed first after the emulsification step, prior to dilution of the emulsion with further water to achieve the solids content of at least 75% by weight. The clear gel high solids emulsion containing silicone polymer, water and surfactant, optionally crosslinker and catalyst, is shelf-stable and may be stored as an intermediate composition for up to 24 months. It is not required in this invention to match the viscosities of the silicone phase and the surfactant/water phase. Viscosities of the silicone and surfactant/water phases may differ by more than a factor of 2 and excellent results have been obtained when the viscosities of the two phases differed by as much as a factor of 1000. The crosslinked polysiloxane dispersion is readily transformed into an elastomer by the removal of water.

The present invention accomplishes several significant advances in the art. First, the process of making a dispersion is improved since the high solids gel phase provides for a higher shear and lower particle size distribution. Second, our process of dispersion making does not require close matching of the viscosities of the silicone polymer phase and the water/surfactant phase. Neither of these process benefits were known in the art. Moreover, our invention reveals that addition of certain types of fillers, in particular, ammonium treated colloidal silica, can alter the physical characteristics of the resulting elastomer and also achieve excellent heat stability. A further advantage is that due to the high polymer solids content of our diluted gel (above 75%), the claimed composition does not require thickeners or other rheology modifiers to achieve excellent handling characteristics, such as desired extrusion rate and "body" of the dispersion (resistance of the wet material felt during tooling of the dispersion). Additionally, the absence of thickener(s) makes possible the manufacture of a "clear" sealant, since thickeners are often opaque and cloud the dispersion. Another advantage of this invention is the versatility of our process, allowing mixing of silicone polymer, water, surfactant, optionally crosslinker and catalyst in the manufacture of a high solids oil-in-water emulsion as a gel phase intermediate. The gel phase intermediate can then be used immediately after preparation or conveniently stored for up to 24 months. The high solids gel is then later diluted with water to form a dispersion having greater than 75% silicone solids content. The gel can be further processed by adding additional ingredients and then diluting the dispersion to the desired solids content. Finally, the present invention is practiced with a wide variety of cure chemistries which allow for manufacture of products with improved shelf-life, compatibility and low toxicity.

As used herein, "silicone content" means the total amount by weight of silicone polymer, polymer mixture and crosslinker. The term "rheology modifier" means a composition, such as a thickener, added primarily for the purpose of altering the rheological properties of the latex dispersion. Typical rheological modifiers include polyvinyl alcohols, polyethylene glycols, polyvinyl pyrrolidones, polyacrylates of alkaline metals, carrageenans, alginates, carboxymethylcelluloses, methylcelluloses, hydroxypropylcelluleoses, hydroxyethylcelluloses and xanthin gum.

The siloxane polymers or polymer mixtures used in the present invention are well known to those skilled in the art. These polymers have a viscosity of 5000 to 500,000 mPa·s as measured at 25°C. These siloxane polymers are described by the following formula (I):

X₃₋ₙRₙYO(R¹ ₂SiO)_{z}YRₙX₃₋ₙ

where n is 0, 1, 2 or 3 and z is an integer from 500 to 5000, X is a hydrogen atom, a vinyl group, a hydroxyl group and any condensable or hydrolyzable group, Y is a silicon atom or a Si(CH₂)ₘSiR¹₂ group, with m being a positive integer of 1 to 8, R is individually selected from the group consisting of aliphatic, alkyl, aminoalkyl, polyaminoalkyl, epoxyalkyl, alkenyl and aromatic aryl groups and R¹ is individually selected from the group consisting of X, hydrogen atom, aliphatic, alkyl, alkenyl and aromatic aryl groups.

X can be hydrogen atom, a vinyl group, a hydroxyl group and any condensable or hydrolyzable group. The term "hydrolyzable group" means any group attached to silicon atom which is hydrolyzed by water at room temperature. The hydrolyzable group X includes hydrogen atoms, halogen atoms such as F, Cl, Br or I; groups of the formula -OY¹ when Y¹ is any hydrocarbon or halogenated hydrocarbon group such as methyl, ethyl, isopropyl, octadecyl, allyl, hexenyl, cyclohexyl, phenyl, benzyl, beta-phenylethyl, any hydrocarbon ether radical such as 2-methoxyethyl, 2-ethoxy-isopropyl, 2-butoxyisobutyl, p-methoxyphenyl or -(CH₂CH₂O)₂CH₃; or any N,N-amino radical such as dimethylamino, diethylamino, ethylmethylamino, diphenylamino or dicyclohexylamino. X can also be any amino radical such as NH₂, dimethylamino, diethylamino, methylphenylamino or dicyclohexylamino; any ketoxime radical of the formula -ON=CM₂ or -ON=CM' in which M is any monovalent hydrocarbon or halogenated hydrocarbon radical such as those shown for Y¹ above and M' is any divalent hydrocarbon radical both valences of which are attached to the carbon atom, such as hexylene, pentylene or octylene; ureido groups of the formula -N(M)CONM"₂ in which M is defined as above and M" is hydrogen atom or any of the M radicals; carboxyl groups of the formula -OOCMM" in which M and M" are as defined above or carboxylic amide radicals of the formula -NMC=O(M") in which M and M" are also as defined above. X can also be sulfate groups or sulfate ester groups of the formula -OSO₂(OM) where M is as defined above; the cyano group; the isocyanate group; and the phosphate group or phosphate ester groups of the formula -OPO(OM)₂ in which M is as defined above.

The most preferred X groups are hydroxyl or alkoxy. Illustrative examples of the alkoxy groups are methoxy, ethoxy, propoxy, butoxy, isobutoxy, pentoxy, hexoxy, 2-ethylhexoxy, methoxymethoxy, ethoxymethoxy and alkoxyaryloxy such as ethoxyphenoxy. The most preferred alkoxy groups are methoxy or ethoxy.

R is individually selected from the group consisting of hydrogen atom, aliphatic, alkyl, aminoalkyl, polyaminoalkyl, epoxyalkyl, alkenyl and aromatic aryl groups. Most preferred are the methyl, ethyl, octyl, vinyl, allyl and phenyl groups.

R¹ is individually selected from the group consisting of X, hydrogen atom or aliphatic, alkyl, alkenyl and aromatic aryl groups. Most preferred are methyl, ethyl, octyl, trifluoropropyl, vinyl and phenyl groups.

When the siloxane polymer of formula (I) has an average of more than two condensable or hydrolyzable groups per molecule, it is not necessary to have a crosslinker present to form a crosslinked polymer. Rather, the condensable or hydrolyzable groups on different siloxane molecules can react with each other to form the required crosslinks.

The siloxane polymer of this invention is a single siloxane represented by the aforesaid formula, mixtures of siloxanes represented by the aforesaid formula or solvent/polymer mixtures. The term "polymer mixture" is meant to include any of these types of polymers or mixtures of polymers.

Our siloxane polymer can also be a mixture of different kinds of molecules, for example, long chain linear molecules and short chain linear or branched molecules. These molecules may react with each other to form a crosslinked network. Said siloxanes, which can take the place of more conventional crosslinkers, are illustrated by low molecular weight organosilicon hydrides, such as polymethylhydrogensiloxane; low molecular weight copolymers containing methylhydrogensiloxy and dimethylsiloxy groups, -{OSi(OEt)₂}-; (ethylpolysilicate); (OSiMeC₂H₄Si(OMe)₃)₄ and (OSi(Me)ON=CR₂)₄, where Me is methyl, Et is ethyl and R is defined as above.

Our siloxane polymer further comprises mixtures of siloxane polymers of formula (I), such as mixtures of α,ω-hydroxysiloxy terminated siloxanes and of α,ω-bis(triorgano-siloxy) terminated siloxanes, mixtures of α,ω-hydroxylsiloxy terminated siloxanes and of α-hydroxy,ω-triorganosiloxy terminated siloxanes, mixtures of α,ω-dialkoxysiloxy terminated siloxanes and of α,ω-bis(triorganosiloxy) terminated siloxanes, mixtures of α,ω-dialkoxysiloxy terminated siloxanes and of α,ω-hydroxysiloxy terminated siloxanes, mixtures of α,ω-hydroxysiloxy terminated siloxanes and of α,ω-bis(triorganosiloxy) terminated poly(diorgano)(hydrogen-organo)siloxane copolymers.

The siloxane polymer of this invention can also comprise mixtures of siloxane polymers of formula (I) as described above with liquid, branched methylpolysiloxane polymers ("MDT fluids") comprising a combination of recurring units of the formulae:

(CH₃)₃Si_{1/2} ("M")

(CH₃)₂SiO ("D")

CH₃SiO_{3/2} ("T")

and containing from 0.1 to 8% of hydroxyl groups. These fluids may be prepared by cohydrolysis of the corresponding chloro- or alkoxysilanes, as described in US-As 3,382,205; 3,661,817; 3,714,089; 4,356,116; 4,468,760 and 5,175,057 or BE-A 0,877,267. The proportion of MDT fluids added should not exceed 50 parts and should preferably be within a range of 1 to 20 parts by weight, per 100 parts by weight of the polymer of formula (I), to achieve improved physical properties and adhesion of our resultant polymers.

The siloxane polymer of the claimed invention can also comprise mixtures of siloxane polymers of formula (I) with liquid or solid, branched methylsiloxane polymeric resins comprising a combination of recurring units of the formulae:

(CH₃)₃Si_{1/2} ("M")

(CH₃)₂SiO ("D")

CH₃SiO_{3/2} ("T")

SiO₂ ("Q")

and containing from 0.1 to 8% of hydroxyl groups. These resins may be prepared by cohydrolysis of the corresponding chloro- or alkoxysilanes, as described in US-As 2,676,182; 2,441,320; 4,707,531 and 5,070,175; EP-As 0,529,547 or 0,535,687; DE-A 4,124,588; JP-A 05-098,012 or WO 93/23455. The MDTQ resin may be added in a proportion not exceeding 50 parts and should preferably be within a range of 1 to 10 parts by weight, per 100 parts by weight of the polymer of formula (I) to improve physical properties and adhesion of the resultant polymers. MDTQ resins may also be mixed with MDT fluids and the polymers of Formula (I).

Finally, our siloxane polymer can comprise mixtures of siloxane polymers of Formula (I) with compatible organic solvents, to form organic polymer/solvent mixtures. These organic solvents are exemplified by organophosphate esters, such as trioleylphosphate, trioctylphosphate or tetraethyleneglycol-monolauryletherphosphate, as disclosed in US-A 4,147,855 or DE-A 2,802,170; alkanes, such as hexane; heptanes; higher paraffins and aromatic solvents, such as toluene or benzene. The polymer solvent mixtures may also be blended with MDT fluids and/or MDTQ resins and the polymers of Formula I. Any of the above mixtures of polymers or polymer/solvents are prepared by mixing the ingredients prior to emulsification or by emulsifying them individually and then mixing the emulsions. Solvent amounts of 1 to 100 weight parts are contemplated herein.

The surfactant of the present invention is selected from nonionic surfactants, cationic surfactants, anionic surfactants, amphoteric surfactants and mixtures thereof. The term "surfactant" is meant to describe a surfactant selected from these categories of surfactants or their mixtures. The surfactant is present in our composition in an amount of 0.5 to 10 parts by weight, preferably 2 to 10 parts by weight, based on 100 parts by weight of the siloxane polymer.

Most preferred are nonionic surfactants known in the art for emulsification of polysiloxanes. Useful nonionic surfactants are polyoxyalkylene alkyl ethers, polyoxyalkylene sorbitan esters, polyoxyalkylene esters, polyoxyalkylene alkylphenyl ethers, ethoxylated amides, ethoxylated siloxanes, block copolymers of propylene oxide and ethylene oxide. Non-ionic surfactants commercially available and useful in the instant invention are further exemplified by TERGITOL™ TMN-6, 15S40, 15S3, 15S5 and 15S7 produced by Union Carbide Corporation (Danbury, CT); BRIJ™ 30 and 35 produced by ICI Chemicals (Wilmington, DE); TRITON™ X405 produced by Rohm and Haas (Philadelphia, PA); MAKON™ 10 produced by Stepan Company (Northfield, IL); ETHOMID™ O/17 produced by Akzo Inc. (Chicago, IL); PLURONIC™ F38 produced by BASF Corp (Parsippany, N.J) and Dow Corning™ 5211 and 5212 (Dow Corning Corp, Midland, Mi).

Cationic and anionic surfactants also known in the art for emulsification of polysiloxanes are also suitable as the surfactant in the claimed invention. Suitable cationic surfactants are aliphatic fatty amines and their derivatives such as dodecylamine acetate; octadecylamine acetate and acetates of the amines of tallow fatty acids; homologues of aromatic amines having fatty chains, such as dodecylanalin; fatty amides derived from aliphatic diamines, such as undecylimidazoline; fatty amides derived from disubstituted amines, such as oleylaminodiethylamine; derivatives of ethylene diamine; quaternary ammonium compounds, such as tallow trimethyl ammonium chloride, dioctadecyldimethyl ammonium chloride, didodecyldimethyl ammonium chloride and dihexadecyldimethyl ammonium chloride; amide derivatives of amino alcohols such as beta-hydroxyethylsteraryl amide; amine salts of long chain fatty acids; quaternary ammonium bases derived from fatty amides of disubstituted diamines, such as oleylbenzylaminoethylene diethylamine hydrochloride; quaternary ammonium bases of the benzimidazolines, such as methylheptadecyl benzimidazole hydrobromide; basic compounds of pyridinium and its derivatives such as cetylpyridinium chloride; sulfonium compounds, such as octadecylsulfonium methyl sulfate; quaternary ammonium compounds of betaine, such as betaine compounds of diethylamino acetic acid and octadecylchloromethyl ether; urethanes of ethylene diamine, such as the condensation products of stearic acid and diethylene triamine; polyethylene diamines and polypropanol-polyethanol amines.

Cationic surfactants commercially available and useful in our invention include ARQUAD™ T27W, 16-29, C-33 and T50; ETHOQUAD™ T/13 Acetate, all manufactured by Akzo Chemie (Chicago, IL).

Suitable anionic surfactants are sulfonic acids and their salt derivatives. These anionic surfactants are exemplified by alkali metal sulforicinates; sulfonated glycerol esters of fatty acids, such as sulfonated monoglycerides of coconut oil acids; salts of sulfonated monovalent alcohol esters such as sodium oleylisethionate; amides of amino sulfonic acids such as the sodium salt of oleyl methyl tauride; sulfonated products of fatty acid nitriles, such as palmitonitrile sulfonate; sulfonated aromatic hydrocarbons, such as sodium alpha-naphthalene monosulfonate; condensation products of naphthalene sulfonic acids with formaldehyde; sodium octahydroanthracene sulfonate; alkali metal alkyl sulfates; ether sulfates having alkyl groups of 8 or more carbon atoms and alkylarylsulfonates with one or more alkyl groups of eight or more carbon atoms.

Commercially available anionic surfactants are POLYSTEP™ A4, A7, A11, A15, A15-30K, A16, A16-22, A18, A13, A17, B1, B3, B5, B11, B12, B19, B20, B22, B23, B24, B-25, B27, B29, C-OP3S; ALPHA-STEP™ ML40 or MC48; and STEPANOL™ MG; all produced by Stepan Company (Northfield, Illinois); HOSTAPUR™ SAS produced by Hoechst Celanese (Chatham, NJ) and HAMPOSYL™ C30 or L30 produced by W.R. Grace & Co. (Lexington, MA.).

Suitable amphoteric surfactants include glycinates, betaines, sultaines and alkyl aminopropionates. These are exemplified by cocoamphoglycinate, cocoamphocarboxyglycinates, cocoamidopropylbetaine, lauryl betaine, cocoamidopropylhydroxysultaine, laurylsulataine and cocoamphodipropionate.

Commercially available amphoteric surfactants are REWOTERIC™ AM TEG, AM DLM-35, AM B14 LS, AM CAS and AM LP produced by Sherex Chemical Co. (Dublin, OH).

In addition to adding the surfactant to the polysiloxane, polysiloxane polymer mixture, polysiloxane/solvent mixture or polysiloxane/organic polymer mixture, our dispersion also includes a predetermined amount of water. The water is present in our composition in an amount of 0.5 to 200 parts by weight based on the siloxane polymer.

After the mixture of siloxane polymer, surfactant and water is formed, it is emulsified by mixing with sufficient shear and for a sufficient period to form a high solids gel phase. Either crosslinker or catalyst, or both, may be added to the mixture either prior to or after emulsification. The mixing will preferably take place at a temperature of 10 to 70°C. Further optional ingredients, such as adhesion promoters in amounts up to 20 weight parts, pigments and fillers may be added either before or after emulsification. If crosslinker, catalyst and/or optional ingredients are added after the emulsification step, they may be added either before or after diluting the gel phase with water to the desired solids content. The gel phase will have a polymer solids content of at least 90%, preferably in the range of 90% to 98%.

For industrial production, any type of mixing equipment may be used to perform the emulsification step, such as batch mixers, planetary mixers, continuous compounders such as single or multiple screw extruders, dynamic or static mixers, colloid mills, homogenizers and sonolators or combinations of these devices, such as sonolators and static mixers, batch mixers and dynamic mixers or dynamic and static mixers.

The high solids gel phase formed by emulsifying siloxane polymer, surfactant and water and having a polymer solids content of greater than 90%, is shelf-stable and can be stored for up to 24 months prior to further processing.

After emulsification, the gel phase is further diluted with water to achieve a silicone solids content of greater than 75%. The high silicone solids content of the final dispersion is critical and distinguishes the present invention over the prior art. A silicone latex having a silicone solids content of greater than 75% allows the silicone latex to be used as a sealant without the need for thickeners or fillers. This is in contrast to EP-A2 0 463 431, WO 94/09058 and WO 94/09059, which do not teach a method of producing a dispersion of crosslinked silicone latex having a silicone solids content of greater than 75% and instead teaches the mandatory use of a thickener. The water is added to achieve our desired product consistency or to facilitate the addition of other components of the composition, such as fillers, pigments and the like.

Adhesion promoters may be added as an optional ingredient to our compositions claimed herein in amounts up to 20 weight parts. They may be added either before or after the emulsification step. If added after the emulsification step, they are added either before or after diluting the high solids gel phase with water to the desired solids content. Suitable adhesion promoters are silanes of the formula RₙSiX₄₋ₙ where n is 0, 1 or 2 in said formula and X is hydrogen atom, a vinyl group, a hydroxyl group and any condensable or hydrolyzable group as used above. R is individually selected from the group consisting of aliphatic, alkyl, aminoalkyl, polyaminoalkyl, epoxyalkyl, alkenyl organic or aromatic aryl groups as also defined above.

Silanes or siloxanes particularly useful in the practice of our invention for addition cure systems are those that have both SiH and SiX functionalities on the same molecule. An example of such a silane is represented by formula (II):

HSiR₂-(SiR¹ ₂O)ᵤ-SiR(OCH₃)₃

where u is a positive integer of less than 5000.

The crosslinkers and catalysts of the present invention depend on the type of silicon cure system employed to cure our composition. These curing mechanisms are well known to those skilled in the art and are discussed below generally. In the method of the present invention, the crosslinkers or catalysts may be added either individually or together before or after emulsification.

One class of silicon cure systems involves condensation reactions, for instance between silanol (Si-OH) and silicon hydride (Si-H) groups; between silanol (Si-OH) and hydrolyzable or condensable silyl groups, such as Si-OC(O)CH₃, Si-NR₂ and Si-ON=CR₂, between silicon hydride and hydrolyzable or condensable groups; between two hydrolyzable or condensable groups of the same or different species; and the like. One example of this cure system is the reaction between a siloxane polymer bearing silanol groups and a crosslinking compound bearing hydrolyzable groups directly attached to silicon atom(s). Another example of this cure system is the reaction between a siloxane polymer, bearing hydrolyzable or condensable groups directly attached to silicon atom(s) and a crosslinking compound bearing silanol groups. Also, an example of this cure system is the reaction between two siloxane polymers bearing hydrolyzable or condensable groups attached directly to silicon atom(s). A further example of this cure system is the reaction between a siloxane polymer, bearing hydrolyzable or condensable groups directly attached to silicon atom(s) and a siloxane polymer bearing active hydrogen atoms, such as in hydroxyl, ureido, mercapto or amino groups.

The following condensation cure chemistries are considered useful for the practice of this invention:
(a) the polymer bears hydroxyl groups attached directly to silicon atom(s); and the crosslinking compound is selected from a silane, a siloxane oligomer or polymer, a siloxane resin and a silicon modified organic oligomer, polymer or resin, bearing hydrolyzable or condensable groups attached directly to silicon atom(s);
(b) the polymer bears hydrolyzable or condensable groups directly attached to silicon atom(s); and the crosslinking compound is selected from a siloxane oligomer or polymer, a siloxane resin, a silica, a silicate, a siliconate and a silicon modified organic oligomer, polymer or resin bearing silanol groups;
(c) the polymer bears hydrolyzable or condensable groups directly attached to silicon atom(s); and the crosslinking compound is selected from a silane, a siloxane oligomer or polymer, a siloxane resin and a silicon modified organic oligomer, polymer or resin, bearing hydrolyzable or condensable groups attached directly to silicon atom(s); the hydrolyzable groups on the siloxane polymer and the crosslinking compound being the same or different; and, if the crosslinking compound is a polymer, the first polymer and the crosslinking compound (second polymer) being the same or different polymers;
(d) the polymer bears hydroxyl groups attached directly to silicon atom(s); and the crosslinking compound is selected from a silane, a siloxane oligomer or polymer, a siloxane resin and a silicon modified organic oligomer, polymer or resin, bearing silicon hydride groups and, optionally, other hydrolyzable or condensable groups attached directly to silicon atom(s);
(e) the polymer bears hydrolyzable or condensable groups attached directly to silicon atom(s); and the crosslinking compound is selected from a silane, a siloxane oligomer or polymer, a siloxane resin and a silicon modified organic oligomer, polymer or resin, bearing silicon hydride groups and, optionally, other hydrolyzable or condensable groups attached directly to silicon atom(s);
(f) the polymer bears silicon hydride groups and, optionally, other hydrolyzable or condensable groups attached directly to silicon atom(s) and the crosslinking compound is selected from a silane, a siloxane oligomer or polymer, a siloxane resin and a silicon modified organic oligomer, polymer or resin, bearing hydrolyzable or condensable groups; and
(g) the polymer bears silicon hydride groups and, optionally, other hydrolyzable or condensable groups attached directly to silicon atom(s); and the crosslinking compound is selected from a siloxane oligomer or polymer, a siloxane resin, a silica, a silicate, a siliconate and a silicon modified organic oligomer, polymer or resin bearing silanol groups.

The number of reactive radicals on the siloxane polymer and the crosslinker determine whether a cured elastomer is obtained. An elastomeric network is formed by the condensation cure, if the sum of the reactive radicals on the polymer and the reactive radicals on the crosslinker is at least 5. For example, if the polymer has two hydroxysiloxy groups and the crosslinker has three condensable groups directly attached to silicon atom(s), an elastomer is obtained. An elastomer is also obtained by reacting a siloxane polymer bearing a total of four hydrolyzable groups, attached to two silicon atoms, with another siloxane polymer bearing two silanol groups. However, no elastomer is obtained by reacting a siloxane polymer bearing two silanol groups with a crosslinker bearing two hydrolyzable groups directly attached to silicon atom(s).

Some condensation cure chemistries require a catalyst to effect the reaction between polymer and crosslinking compound. Suitable silanol condensation catalysts are well know in the art. Examples of catalysts preferably employed in the condensation reactions (a) to (g) are: (organo)metallic compounds, amino compounds, carboxylic acids, salts of amino compounds with carboxylic acids or other acids, low molecular weight polyamide resins obtained by the reaction of excess polyamines with polybasic acids, the reaction products between epoxy compounds and an excess of polyamines or mixtures of the above condensation catalysts.

Specific examples of (organo)metallic compounds are the salts of a carboxylic acids, alcoholates and halides of lead, zinc, zirconium, titanium, antimony, iron, cadmium, tin, barium, calcium or manganese, as taught in US-As 3,355,406, 3,706,695, 4,100,124, 4,288,356, 4,587,288 and 4,608,412. Further examples of (organo)metallic compounds are titanic acid esters and chelates, such as tetrabutyl titanate, tetrapropyl titanate, titanium tetraacetyl acetonate or dibutoxytitanium bis(ethyl acetoacetate); zirconium chelates, such as zirconium tetraacetyl acetonate; organo aluminum compounds, such as aluminum trisacetyl acetonate, aluminum trisethyl acetoacetonate or diisopropoxy aluminum ethyl acetoacetonate.

Specific examples of amino compounds are butyl amine, octyl amine, dibutyl amine, monoethanol amine, diethanol amine, triethanol amine, diethylene triamine, triethylene tetramine, triethylene diamine, oleyl amine, cyclohexyl amine, benzyl amine, diethylaminopropyl amine, xylylene diamine, guanidine, diphenyl guanidine, 2,4,6-tris (dimethyl aminomethyl) phenol, morpholine, N-methyl morpholine, 2-ethyl-4-methylimidazole, 1,8-diazabicyclo-(5,4,0)undecene-7 and aminosilanes such as g-amino propyltrimethoxysilane or N-(b-aminoethyl)-g-aminopropylmethyldimethoxysilane. Specific examples of carboxylic acids are formic acid or acetic acid.

Particularly preferred (organo)metallic catalysts which act as condensation catalysts are (organo)tin compounds of carboxylic acids having from 1 to 18 carbon atom(s) and (organo)tin halides, in particular organotin octoates, naphthenates, hexoates, laurates, acetates, bromides and chlorides. Specific examples of (organo)tin compounds are tin(II)octoate, dibutyltin dilaurate, octyltin triacetate, dioctyltin dioctoate, dioctyltin diacetate, didecyltin diacetate, dibutyltin diacetate, dibutyltin dibromide, dioctyltin dilaurate and trioctyltin acetate. Preferred compounds are tin(II)octoate and diorganotin dicarboxylates, in particular dibutyltin dilaurate, dioctyltin dilaurate, dibutyltin diacetate and dioctyltin diacetate. This catalyst may also be the product of a reaction of a tin salt, in particular of a tin dicarboxylate, with an alkoxysilane or ethyl polysilicate, as described in US-As 3,862,919, 4,102,860, 4,137,249 and 4,152,343.

However, other tin catalysts can also be utilized, such as those selected from the class consisting of stannoxanes, hydroxystannoxanes and monoalkoxyacylstannanes. More particularly, diacylstannoxane, acylhydroxystannoxane, monomethoxyacylstannanes, dihalostannoxane or halohydroxystannoxane have been found effective. If silica is used as a reinforcing filler in our composition, then divalent tin compounds are the most preferred condensation catalysts and are preferably described in US-A 4,954,565. The divalent, stannous form of (organo)tin compounds do not cause a reaction between the silanol functional polymer and silica but the tetravalent, stannic form of (organo)tin compounds will cause such an undesirable reaction. The preferred stannous catalyst is stannous octoate (stannous bis(2-ethyl-hexanoate).

Use of co-catalysts, for example, amino compounds or carboxylic acids, like acetic acid, with tetravalent tin compounds like dibutyltin diacetate, allow for a significant reduction of the (organo)tin catalyst level. When said cocatalysts are used, they are added in an amount preferably from 0.01 to 20 weight parts, more preferably from 0.1 to 10 weight parts, per 100 weight parts of the silicon modified organic polymer.

Amine functional silanes, added as adhesion promoters, may also catalyze condensation reactions between silanes bearing hydrogen or hydrolyzable groups and the hydroxysiloxy endblocked siloxane polymers.

Further compounds suitable for catalyzing condensation reactions (d) to (g) are group VIII transition metal (noble metal) compounds of the periodic chart. The noble metal catalyst is selected from any of those well known to the art, such as US-A 3,923,705, which teaches the use of platinum catalysts. A preferred platinum catalyst is a composition consisting essentially of the reaction product of chloroplatinic acid and an organosilicon compound containing terminal aliphatic unsaturation, such as described in US-A 3,419,593. When noble metal catalysts are used, they are added in an amount preferably from 0.000001 to 0.5 weight parts, more preferably from 0.00001 to 0.002 weight parts, per 100 weight parts of the silicon modified organic polymer.

For example, in one condensation cure system of the present invention, the siloxane polymer has functional groups such as hydroxyl, condensable or hydrolyzable group(s) attached to silicon atom(s) and the crosslinker has silicon-bonded hydrogen atoms. The polymer and the crosslinker are reacted in the presence of a condensation catalyst, like the one disclosed in US-As 4,310,678, 4,782,112, 4,962,153 and 4,978,710.

The silicon hydride crosslinker can be chosen from hydrolyzable silicon hydride, polymeric or oligomeric compounds containing hydrogen and, optionally, hydrolyzable or condensable groups bound directly to silicon atom(s), such as polyorganohydrogensiloxane, alkylhydrogencyclosiloxane and liquid copolymers comprising SiO₂ and/or SiO_{3/2} units and those bearing silicon-bonded hydrogen atoms, such as taught in US-A 4,310,678 or other organic polymers or resins containing Si-H groups and optionally other hydrolyzable or condensable silyl groups directly bound to carbon atom(s) via Si-C bonds. The crosslinker may also be a silsesquioxane containing hydrogen and optionally alkoxy groups bound directly to silicon atoms, as claimed in US-A 5,047,492. The hydrolyzable silicon hydride should have at least one, but not more than three, hydrogen atom(s) bonded to silicon per molecule. It may have one or two hydrolyzable atoms or groups, such as alkoxy, bonded to silicon per molecule, such as methyldiethoxysilane.

Examples of crosslinkers are trimethylsilyl endblocked polymethylhydrogensiloxane and methylhydrogencyclosiloxane. The SiH functional crosslinker is added in sufficient amount to provide at least one hydrogen atom for each hydroxyl or alkoxy group in the polydiorganosiloxane polymer. Preferably, an excess of SiH functional crosslinker is provided so that all hydroxyl or alkoxy groups are reacted.

In a typical preparation, a noble metal catalyst is present in the composition in an amount of from 0.000001 to 0.5 parts, preferably from 0.00001 to 0.002 parts by weight. Any other condensation catalyst is present in the composition in an amount of from 0.01 to 10 parts by weight and preferably 0.05 to 5 parts by weight per 100 weight parts of siloxane polymer. The SiH functional crosslinker is present in an amount of from 0.1 to 10 parts by weight per 100 parts by weight of siloxane polymer which contains hydroxyl and hydrolyzable or condensable groups.

In an alternative cure system, siloxane polymer having at least two silicon-bonded hydrogen atoms is reacted in the presence of a condensation catalyst with a crosslinker having, on average, at least two hydroxyl and at least two condensable or hydrolyzable groups per molecule attached directly to silicon atoms(s). In a typical preparation, the catalyst is present in the composition in the same amount as described above and the crosslinker, depending on the type of crosslinker utilized, is available in an amount from 0.1 to 50 parts by weight per 100 weight parts of said siloxane polymer.

In another condensation cure system, the siloxane polymer has at least two hydroxysiloxy groups and the crosslinker has on average at least two hydrolyzable OR" groups, where R" is a monovalent unsubstituted or substituted hydrocarbon radical bonded to silicon atom(s) per molecule. The siloxane polymer and crosslinker are reacted in the presence of a condensation catalyst. The crosslinker is a silane of the formula RₓSiY²₍₄₋ₓ₎, where x of this formula is either 0 or 1. R of this formula is hydrogen atom, a monovalent hydrocarbon radical or substituted hydrocarbon radical having 7 or less carbon atoms, such as an alkyl or alkenyl radical, a halogenated hydrocarbon, an aryl radical or a functionalized hydrocarbon radical. Y² is OR", where R" is a monovalent unsubstituted or substituted hydrocarbon radical. Suitable silanes include ethylorthosilicate, propylorthosilicate, mercaptopropyltrimethoxysilane, methyltrimethoxysilane, phenyltrimethoxysilane, chloropropyltrimethoxysilane, amyltriethoxysilane, g-glycidoxy-propyltrimethoxysilane, trifluoropropyltri-methoxysilane, ethyltrimethoxysilane, triethoxysilane and vinyltrimethoxysilane. The crosslinker can also be a silsesquioxane containing alkoxy, aryloxy, alkoxyalkoxy or alkoxyaryloxy groups bound directly to silicon atoms, as shown in US-A 5,047,492.

The crosslinker may also be a linear or cyclic siloxane oligomer containing OR" groups, an organic polymer or resin bearing Si-OR" groups and, optionally, an additional crosslinker having at least one hydrolyzable group per molecule other than OR" bound directly to silicon atom(s). The crosslinker may also be the partial hydrolysis and condensation product (dimer, trimer, tetramer, etc.) of the above named crosslinkers. In a typical preparation, the condensation catalyst is present in the composition in an amount from 0.01 to 10 parts, preferably from 0.05 to 5 parts, and the crosslinker is present in an amount of from 0.1 to 50 parts, preferably from 1 to 10 parts, each by weight, based on 100 parts by weight of siloxane polymer.

As an alternative to the latter condensation cure system, the siloxane polymer has at least two hydrolyzable OR" groups and, optionally, other hydrolyzable or condensable group(s) other than OR" bound to silicon atom(s). The polymer is then reacted in the presence of a condensation catalyst as described above with a crosslinker having, on average, at least two hydroxyl groups per molecule bound to silicon atom(s). In a typical preparation, the catalyst is present in the composition in an amount from 0.01 to 10 parts, preferably from 0.01 to 5 parts. The crosslinker, depending on its nature, is present in an amount from 0.1 to 50 parts, preferably from 1 to 10 parts, each by weight, based on 100 parts by weight of siloxane polymer.

As a further alternative to this latter condensation cure system, the siloxane polymer contains at least two hydrolyzable OR" groups and, optionally, other hydrolyzable or condensable group(s), other than OR" bound to silicon atoms, which can be crosslinked in the presence of a condensation catalyst as described above. In case the siloxane polymer has only two hydrolyzable OR" groups and no further hydrolyzable group(s), the presence of a crosslinker, which on average has at least two hydrolyzable groups per molecule bound to silicon atom(s), is required. In case the siloxane polymer has more than two hydrolyzable OR" groups or two OR" groups and further hydrolyzable group(s) other than OR" attached to silicon atoms, the presence of a crosslinker is not required. In a typical preparation, the catalyst is present in the composition in an amount from 0.01 to 10 parts, preferably from 0.01 to 5 parts and the additional crosslinker, if required, is present in an amount from 0.1 to 20 parts, preferably from 0.1 to 10 parts, each by weight, based on 100 parts by weight of siloxane polymer.

In a third condensation cure system of the present invention, the siloxane polymer having at least two hydroxysiloxy groups and the crosslinker having on average at least two hydrolyzable acyloxy groups per molecule bonded to silicon atom(s), are reacted, optionally in the presence of a condensation catalyst, as taught in US-A 5,321,075. The crosslinker is an acyloxy silane of the formula (III) of RₓSi(O(O)CR')_{4-X''} where x therein is either 0 or 1; R therein is selected from hydrogen atom, a monovalent hydrocarbon radical or substituted hydrocarbon radical having 7 or less carbon atoms, such as an alkyl or alkenyl radical, a halogenated hydrocarbon, an aromatic aryl radical and a functionalized hydrocarbon radical; and R' therein is hydrogen atom, a monovalent hydrocarbon or a monovalent substituted hydrocarbon radical. Examples of suitable acyloxysilane crosslinkers are methyltriacetoxysilane, ethyltriacetoxysilane, phenyltriacetoxysilane, ethyltriacetoxysilane, phenyltriacetoxysilane and methyltris(benzoyloxy)silane. A preferred acyloxysilane is vinyltriacetoxysilane. The acyloxysilane may also be prereacted with a siloxane, such as (CH₃)₃SiO(CH₃HSiO)ₓ((CH₃COO)₃SiCH₂CH₂SiCH₃O)_{y}Si(CH₃)₃, as disclosed in DE 2,316,184.

The crosslinker may also be a linear or cyclic siloxane oligomer containing acyloxysiloxy groups. The crosslinker may further be a silsesquioxane containing acyloxy groups bound directly to silicon atom(s), an organic polymer or resin bearing acyloxysilyl groups and, optionally, an additional crosslinker having at least one other hydrolyzable or condensable group per molecule, other than acyloxy, bound directly to silicon atom(s). Crosslinker may also be a partial hydrolysis and condensation product (dimer, trimer, tetramer, etc.) of the above named crosslinkers. In a typical preparation, the optional catalyst is present in the composition in an amount from 0.01 to 10 parts, preferably from 0.01 to 5 parts and the crosslinker is present in an amount of from 0.1 to 50 parts, preferably in an amount from 1 to 10 parts, each by weight, based on 100 parts by weight of siloxane polymer.

In an alternative to this third condensation cure system, the siloxane polymer having at least two hydrolyzable acyloxy groups and, optionally, other hydrolyzable or condensable group(s) other than acyloxy bound to silicon atom(s), is reacted with a crosslinker having on average, at least two hydroxyl groups bound to silicon atoms, optionally in the presence of a condensation catalyst. In a typical preparation, the optional catalyst is present in the composition in an amount from 0.01 to 10 parts, preferably from 0.01 to 5 parts and the crosslinker, depending on its nature, is present in an amount of from 0.1 to 50 parts, preferably from 1 to 10 parts, each by weight, based on 100 parts by weight of siloxane polymer.

As a further alternative to the third condensation cure system, the siloxane polymer has at least two hydrolyzable acyloxy groups and, optionally, other hydrolyzable or condensable group(s) other than acyloxy bound to silicon atom(s), are crosslinked, optionally, in the presence of a condensation catalyst as described above. In case the siloxane polymer has only two hydrolyzable acyloxy groups and no further hydrolyzable group(s), the presence of a crosslinker, which on average, has at least two hydrolyzable groups per molecule bonded to silicon atom(s), is required. In case the siloxane polymer has more than two hydrolyzable acyloxy groups or two acyloxy groups and further hydrolyzable group(s) other than acyloxy attached to silicon atoms, the presence of a crosslinker is not required. In a typical preparation, the optional catalyst is present in the composition in an amount from 0.01 to 10 parts, preferably from 0.01 to 5 parts and the additional crosslinker, if required, is present in an amount of from 0.1 to 20 parts, preferably from 0.1 to 10 parts, each by weight, based on 100 parts by weight of siloxane polymer.

In a fourth condensation cure system of the present invention, the siloxane polymer, having at least two hydroxysiloxy groups, is reacted with a crosslinker, bearing on average at least two hydrolyzable oximo groups per molecule bonded to silicon atom(s), optionally in the presence of a condensation catalyst. Comparable systems are described in detail in US-As 4,618,642 and 4,954,565. The crosslinker is an oximosilane of formula (IV) of RₓSi(O-N=C(R'R"))₄₋ₓ, where x therein is either 0 or 1; R therein is selected from hydrogen atom, a monovalent hydrocarbon radical or substituted hydrocarbon radical having less than 7 carbon atoms, such as an alkyl or alkenyl radical, a halogenated hydrocarbon, an aryl radical or a functionalized hydrocarbon radical; and R' or R" therein are individually selected from hydrogen atom, monovalent hydrocarbon and monovalent substituted hydrocarbon radical.

Examples of suitable acyloxysilane crosslinkers are methyltris(methylethylketoximo)silane, methyltris(dimethylketoximo)silane, methyltris(diethylketoximo)-silane, vinyltris(methylethylketoximo)silane, vinyltris(methylisobutylketoximo)silane, tetra(methylisobutylketoximo)silane. The crosslinker may also be an oximosilane of the formula (V) R⁴ ₐ(R³SiO)_{b}Si(ONCR¹R²)_{4-(a+b)}, with R¹, R², R³ and R⁴ therein independently being selected from the group consisting of alkyl or fluoroalkyl radicals of C₁₋₈, cycloalk(en)yl radicals of C₅₋₆ alkenyl radicals of C₂₋₈ or aryl radicals, a therein is either 0 or 1 and b therein is either 1 or 2, as disclosed in DE-A 3,903,337.

The crosslinker may further be a linear or cyclic siloxane oligomer containing oximosiloxy groups, a silsesquioxane containing oximo and, optionally, other hydrolyzable or condensable groups bound directly to silicon atoms, an organic polymer or resin bearing oximosilyl groups and, optionally, an additional crosslinker having on average at least one other hydrolyzable or condensable group per molecule other than oximo bound directly to silicon atoms. The crosslinker may also be a partial hydrolysis and condensation product (dimer, trimer, tetramer, etc.) of the above crosslinkers.

In a typical preparation, the optional condensation catalyst, depending on its nature, is present in the composition in an amount from 0.01 to 10 parts, preferably from 0.01 to 5 parts, and the crosslinker is present in an amount of from 0.1 to 50 parts, preferably from 1 to 10 parts, each by weight, based on 100 parts by weight of siloxane polymer.

In an alternative to this fourth condensation cure system, the siloxane polymer has at least two hydrolyzable oximo groups and, optionally, other hydrolyzable or condensable group(s) other than oximo bound to silicon atom(s) and is reacted with a crosslinker having, on average, at least two hydroxyl groups per molecule bound to silicon atoms, optionally in the presence of a condensation catalyst. In a typical preparation, the optional catalyst is present in the composition in an amount from 0.01 to 10 parts, preferably from 0.01 to 5 parts and the crosslinker, depending on its nature, is present in an amount of from 0.1 to 50 parts, preferably from 1 to 10 parts, each by weight, based on 100 parts by weight of siloxane polymer.

As a further alternative to the fourth condensation cure system, the siloxane polymer has at least two hydrolyzable oximo groups and, optionally, other hydrolyzable or condensable group(s) other than oximo bound to silicon atom(s) and is crosslinked, optionally, in the presence of a condensation catalyst as described above. If the siloxane polymer has only two hydrolyzable oximo groups and no further hydrolyzable group(s), the presence of a crosslinker, which on average, has at least two hydrolyzable groups per molecule bonded to silicon atom(s), is required. In case the siloxane polymer has more than two hydrolyzable oximo groups or two oximo groups and further hydrolyzable group(s) other than oximo attached to silicon atoms, the presence of a crosslinker is not required. In a typical preparation, the optional catalyst is present in the composition in an amount from 0.01 to 10 parts, preferably from 0.01 to 5 parts and the additional crosslinker, if required, is present in an amount of from 0.1 to 20 parts, preferably from 0.1 to 10 parts, each by weight, based on 100 parts by weight of siloxane polymer.

In a fifth condensation cure system, the siloxane polymer having at least two hydroxysiloxy groups is reacted with a crosslinker, having, on average, at least two hydrolyzable amino groups per molecule bonded directly to silicon atom(s), optionally in presence of a condensation catalyst. The crosslinker is a silazane of formula (VI) of (Rₙsi(NR'₂)₄₋ₙ), as described in US-As 3,032,528; 3,338,868; 3,464,951 and 3,408,325, where R therein is hydrogen atom, monovalent hydrocarbon radical or substituted hydrocarbon radical having 7 or less carbon atoms, functionalized hydrocarbon radicals, nitrogen compounds of the formulae -N=CR'₂, -NR'COR', -NR'₂ or -NR", where R' therein is either hydrogen atom, monovalent hydrocarbon or monovalent substituted hydrocarbon radical and R" therein is cycloalkyl radical and n therein is either 0 or 1. A preferred crosslinker is methyltris(cyclohexylamine)silane.

The crosslinker may also be a linear or cyclic siloxane oligomer containing aminosiloxy groups, a silsesquioxane containing amino and, optionally, other hydrolyzable or condensable groups bound directly to silicon atom(s), an organic polymer or resin bearing aminosiloxy groups and, optionally, an additional crosslinker having on average at least one other hydrolyzable or condensable group per molecule other than oximo, bound directly to silicon atom(s). The crosslinker may also be a partial hydrolysis and condensation product (dimer, trimer, tetramer, etc.) of the above crosslinkers. In a typical preparation, the optional condensation catalyst is present in the composition in an amount of from 0.01 to 10 parts, preferably from 0.01 to 5 parts and crosslinker in an amount of from 0.1 to 50 parts, preferably from 1 to 10 parts, each by weight, based on 100 weight parts of siloxane polymer.

In an alternative to the fifth condensation cure system, the siloxane polymer having at least two hydrolyzable amino groups and, optionally, other hydrolyzable or condensable group(s) other than amino bound to silicon atom(s), is reacted with a crosslinker having, on average, at least two hydroxyl groups per molecule bound to silicon atoms, optionally in the presence of a condensation catalyst. In a typical preparation, the optional catalyst is present in the composition in an amount from 0.01 to 10 parts, preferably from 0.01 to 5 parts and the crosslinker, depending on its nature, is present in an amount of from 0.1 to 50 parts, preferably from 1 to 10 parts, each by weight, based on 100 parts by weight of siloxane polymer.

As a further alternative to the fifth condensation cure system, siloxane polymer having at least two hydrolyzable amino groups and, optionally, other hydrolyzable or condensable group(s) other than amino bound to silicon atom(s), which can be crosslinked, optionally, in the presence of a condensation catalyst as described above. In case the siloxane polymer has only two hydrolyzable amino groups and no further hydrolyzable group(s), the presence of a crosslinker, which on average, has at least two hydrolyzable groups per molecule bonded to silicon atom(s), is required. In case the siloxane polymer has more than two hydrolyzable amino groups or two amino groups and further hydrolyzable group(s) other than amino attached to silicon atoms, the presence of a crosslinker is not required. In a typical preparation, the optional catalyst is present in the composition in an amount from 0.01 to 10 parts, preferably from 0.01 to 5 parts and the additional crosslinker, if required, is present in an amount of from 0.1 to 20 parts, preferably from 0.1 to 10 parts, each by weight, based on 100 parts by weight of siloxane polymer.

In a sixth condensation cure system of the present invention, the siloxane polymer having at least two hydroxysiloxy groups is reacted with a crosslinker, having on average, at least two hydrolyzable aminoxy groups per molecule bonded to silicon atom(s), optionally in the presence of condensation catalyst. The crosslinker can be an aminoxysilane of the formula (VII) of RₙSi(ONR'R")₄₋ₙ, a linear aminoxysiloxane of the formula (VIII) of (R₃SiO(SiR₂O)ₐ(SiRXO)_{b}SiR₃), a cyclic aminoxysiloxane (mixture of cyclic siloxanes containing (R₂SiO) and (RXSiO) units), as described in US-As 3,441,583; 3,484,471; 3,528,941; 3,817,909; 3,839,386; 4,075,154; JP-A 57-019,728 and DE-A1 2,640,328, where X therein is ONR'R". R of formulae (VII) and (VIII) are individually selected from the group consisting of hydrogen atom, monovalent hydrocarbon radical or substituted hydrocarbon radical having 7 or less carbon atoms, functionalized hydrocarbon radicals, nitrogen compounds of the formulae -N=CR'₂, -NR'COR', -NR'₂ or -NR"', where R' and R" therein are either hydrogen atom, a monovalent hydrocarbon or a monovalent substituted hydrocarbon radical and R"' therein is a cycloalkyl radical, n therein is either 0 or 1, a therein is 0 or a positive integer and b therein is an integer greater than 2.

The crosslinker can also be a silsesquioxane containing aminoxy and, optionally, other hydrolyzable or condensable groups bound directly to silicon atoms, an organic polymer or resin bearing aminoxysilyl groups and, optionally, an additional crosslinker having an average of at least one other hydrolyzable or condensable group per molecule, other than aminoxy, bound directly to silicon atom(s). The crosslinker can also be a partial hydrolysis and condensation product (dimer, trimer, tetramer, etc.) of the above crosslinkers. In a typical preparation, the optional condensation catalyst is present in the composition in an amount of from 0.01 to 10 parts, preferably from 0.01 to 5 parts and crosslinker is in an amount of from 0.1 to 50 parts, preferably from 1 to 10 parts, each by weight, based on 100 weight parts of siloxane polymer.

In an alternative to the sixth condensation cure system, the siloxane polymer having at least two hydrolyzable aminoxy groups and, optionally, other hydrolyzable or condensable group(s) other than aminoxy bound to silicon atom(s), is reacted with a crosslinker having, on average, at least two hydroxyl groups per molecule bound to silicon atoms, optionally in the presence of a condensation catalyst. In a typical preparation, the optional catalyst is present in the composition in an amount from 0.01 to 10 parts, preferably from 0.01 to 5 parts and the crosslinker, depending on its nature, is present from 0.1 to 50 parts, preferably from 1 to 10 parts, each by weight, based on 100 parts by weight of siloxane polymer.

As a further alternative to the sixth condensation cure system, siloxane polymer having at least two hydrolyzable aminoxy groups and, optionally, other hydrolyzable or condensable group(s) other than aminoxy bound to silicon atom(s), is crosslinked, optionally, in the presence of a condensation catalyst as described above. In case the siloxane polymer has only two hydrolyzable aminoxy groups and no further hydrolyzable group(s), the presence of a crosslinker, which on average has at least two hydrolyzable groups per molecule bonded to silicon atom(s), is required. In case the siloxane polymer has more than two hydrolyzable aminoxy groups or two aminoxy groups and further hydrolyzable group(s) other than aminoxy attached to silicon atoms, the presence of a crosslinker is not required. In a typical preparation, the optional catalyst is present in the composition in an amount from 0.01 to 10 parts, preferably from 0.01 to 5 parts and the additional crosslinker, if required, is present in an amount of from 0.1 to 20 parts, preferably from 0.1 to 10 parts, each by weight, based on 100 parts by weight of siloxane polymer.

In a seventh condensation cure system of the present invention, the siloxane polymer having at least two hydroxysiloxy groups is reacted with a crosslinker, having on average at least two hydrolyzable amido groups per molecule bonded to silicon atom(s), optionally in the presence of a condensation catalyst. The crosslinker can be an amidosilane of formula (IX) of (RₙSi(OR¹)ₘ(NR²-(CO)-R³)₄₋₍ₙ₊ₘ₎), where R therein is selected from the group consisting of hydrogen atom, monovalent hydrocarbon radical or substituted hydrocarbon radical having 7 or less carbon atoms, functionalized hydrocarbon radicals, nitrogen compounds of the formula -N=CR²₂, -NR²COR², -NR²₂ or -NR⁴. R¹ of formula (IX) is a monovalent hydrocarbon radical, a monovalent substituted hydrocarbon radical having 7 or less carbon atoms or a functionalized hydrocarbon radical having 7 or less carbon atoms. R² of formula (IX) is hydrogen atom or monovalent hydrocarbon or substituted hydrocarbon radicals having 7 or less carbon atoms and R³ therein is monovalent aliphatic or aromatic hydrocarbon radical or substituted hydrocarbon radical having 7 or less carbon atoms or functionalized hydrocarbon radical. R⁴ of formula (IX) is a cycloalkyl radical, n therein is either 0 or 1, m therein is either 0, 1 or 2, as described, for example, in US-As 3,378,520 or 4,985,476, optionally in the presence of a condensation catalyst.

Examples of preferred crosslinkers are methyltris(acetamido)silane or methylethoxybis-(N-methylbenzamido)silane. The crosslinker may also be a linear or cyclic siloxane oligomer containing amidosiloxy groups. The crosslinker may also be a silsesquioxane containing amido and, optionally, an additional crosslinker having on average at least one other hydrolyzable or condensable group per molecule other than amido bound directly to silicon atoms, an organic polymer or resin bearing amidosilyl groups and, optionally, other hydrolyzable or condensable groups bound directly to silicon atom(s). The crosslinker may also be a partial hydrolysis and condensation product (dimer, trimer, tetramer, etc.) of the above crosslinkers. In a typical preparation, the optional condensation catalyst is present in the composition in an amount of from 0.01 to 10 parts, preferably from 0.01 to 5 parts and crosslinker is added from 0.1 to 50 parts, preferably from 1 to 10 parts, each by weight, based on 100 weight parts of siloxane polymer.

In an alternative to the seventh condensation cure system, the siloxane polymer having at least two hydrolyzable amido groups and, optionally, other hydrolyzable or condensable group(s) other than amido bound to silicon atom(s), is reacted with a crosslinker having on average at least two hydroxyl groups per molecule bound to silicon atoms, optionally in the presence of a condensation catalyst. In a typical preparation, the optional catalyst is present in the composition in an amount from 0.01 to 10 parts, preferably from 0.01 to 5 parts and the crosslinker, depending on its nature, is present in an amount of from 0.1 to 50 parts, preferably from 1 to 10 parts, each by weight, based on 100 parts by weight of siloxane polymer.

As a further alternative to the seventh condensation cure system, siloxane polymer having at least two hydrolyzable amido groups and, optionally, other hydrolyzable or condensable group(s) other than amido bound to silicon atom(s), can be crosslinked, optionally, in the presence of a condensation catalyst as described above. In case the siloxane polymer has only two hydrolyzable amido groups and no further hydrolyzable group(s), the presence of a crosslinker, which on average has at least two hydrolyzable groups per molecule bonded to silicon atom(s), is required. In case the siloxane polymer has more than two hydrolyzable amido groups or two amido groups and further hydrolyzable group(s) other than amido attached to silicon atoms, the presence of a crosslinker is not required. In a typical preparation, the optional catalyst is present in the composition in an amount from 0.01 to 10 parts, preferably from 0.01 to 5 parts and the additional crosslinker, if required, is present in an amount of from 0.1 to 20 parts, preferably from 0.1 to 10 parts, each by weight, based on 100 parts by weight of siloxane polymer.

In an eighth condensation cure system of the present invention, the siloxane polymer having at least two hydroxysiloxy groups is reacted with a crosslinker, having on average at least two hydrolyzable ureido groups per molecule bonded to silicon atom(s), optionally in the presence of a condensation catalyst. The crosslinker can be an ureido organosilane having the formula (X) of (RₙSi(NR'-(CO)-NR"₂)₄₋ₙ), where R, R' and R" therein are individually selected from the group consisting of hydrogen atom, monovalent hydrocarbon radical or substituted hydrocarbon radical having 7 or less carbon atoms, functionalized hydrocarbon radicals and n therein is either 0 or 1, as described, for example, in US-A 3,506,701. The crosslinker may also be a linear or cyclic siloxane oligomer containing ureidosiloxy groups, a silsesquioxane containing ureido and, optionally, other hydrolyzable or condensable groups bound directly to silicon atoms, an organic polymer or resin bearing ureidosilyl groups and, optionally, an additional crosslinker having on average at least one other hydrolyzable or condensable group per molecule other than ureido bound directly to silicon atom(s). The crosslinker can also be a partial hydrolysis and condensation product (dimer, trimer, tetramer, etc.) of the above crosslinkers. In a typical preparation, the optional condensation catalyst is present in the composition in an amount of from 0.01 to 10 parts, preferably from 0.01 to 5 parts and crosslinker in an amount of from 0.1 to 50 parts, preferably from 1 to 10 parts, each by weight, based on 100 weight parts of siloxane polymer.

In an alternative to the eighth condensation cure system, the siloxane polymer having at least two hydrolyzable ureido groups and, optionally, other hydrolyzable or condensable group(s) other than ureido bound to silicon atom(s), is reacted with a crosslinker having on average at least two hydroxyl groups per molecule bound to silicon atoms, optionally in the presence of a condensation catalyst. In a typical preparation, the optional catalyst is present in the composition in an amount from 0.01 to 10 parts, preferably from 0.01 to 5 parts and the crosslinker, depending on its nature, is present in an amount of from 0.1 to 50 parts, preferably from 1 to 10 parts, each by weight, based on 100 parts by weight of siloxane polymer.

As a further alternative to the eighth condensation cure system, siloxane polymer having at least two hydrolyzable ureido groups and, optionally, other hydrolyzable or condensable group(s) other than ureido bound to silicon atom(s), can be crosslinked, optionally, in the presence of a condensation catalyst as described above. In case the siloxane polymer has only two hydrolyzable ureido groups and no further hydrolyzable group(s), the presence of a crosslinker, which on average has at least two hydrolyzable groups per molecule bonded to silicon atom(s), is required. In case the siloxane polymer has more than two hydrolyzable ureido groups or two ureido groups and further hydrolyzable group(s) other than ureido attached to silicon atoms, the presence of a crosslinker is not required. In a typical preparation, the optional catalyst is present in the composition in an amount from 0.01 to 10 parts, preferably from 0.01 to 5 parts and the additional crosslinker, if required, is present in an amount of from 0.1 to 20 parts, preferably from 0.1 to 10 parts, each by weight, based on 100 parts by weight of siloxane polymer.

In a ninth condensation cure system of the present invention, the siloxane polymer having at least two hydroxysiloxy groups is reacted with a crosslinker, having on average at least two hydrolyzable imidato groups per molecule bonded to silicon atom(s), optionally in the presence of a condensation catalyst. The crosslinker can be an imidato organosilane of the formula (XI) of (RₙSi((N=C(R')(OR"))₄₋ₙ), where R, R' and R" therein are individually selected from the group consisting of hydrogen atom, monovalent hydrocarbon radical or substituted hydrocarbon radical having 7 or less carbon atoms, functionalized hydrocarbon radicals and n therein is either 0 or 1, as described, for example, in US-A 3,622,529. The crosslinker may also be a linear or cyclic siloxane oligomer containing imidatosiloxy groups, a silsesquioxane containing imidato and, optionally, an additional crosslinker having on average at least one other hydrolyzable or condensable group bound directly to silicon atoms, an organic polymer or resin bearing imidatosilyl groups and, optionally, an additional crosslinker having on average at least one other hydrolyzable or condensable group per molecule other than imidato bound directly to silicon atom(s). The crosslinker can also be a partial hydrolysis and condensation product (dimer, trimer, tetramer, etc.) of the above crosslinkers. In a typical preparation, the optional condensation catalyst is present in the composition in an amount of from 0.01 to 10 parts, preferably from 0.01 to 5 parts and crosslinker in an amount of from 0.1 to 50 parts, preferably from 1 to 10 parts, each by weight, based on 100 weight parts of siloxane polymer.

In an alternative to the ninth condensation cure system, the siloxane polymer having at least two hydrolyzable imidato groups and, optionally, other hydrolyzable or condensable group(s) other than imidato bound to silicon atom(s), is reacted with a crosslinker having on average at least two hydroxyl groups per molecule bound to silicon atoms, optionally in the presence of a condensation catalyst. In a typical preparation, the optional catalyst is present in the composition in an amount from 0.01 to 10 parts, preferably from 0.01 to 5 parts and the crosslinker, depending on its nature, is present in an amount of from 0.1 to 50 parts, preferably from 1 to 10 parts, each by weight, based on 100 parts by weight of siloxane polymer.

As a further alternative to the ninth condensation cure system, siloxane polymer having at least two hydrolyzable imidato groups and, optionally, other hydrolyzable or condensable group(s) other than imidato bound to silicon atom(s), can be crosslinked, optionally, in the presence of a condensation catalyst as described above. In case the siloxane polymer has only two hydrolyzable imidato groups and no further hydrolyzable group(s), the presence of a crosslinker, which on average has at least two hydrolyzable groups per molecule bonded to silicon atom(s), is required. In case the siloxane polymer has more than two hydrolyzable imidato groups or two imidato groups and further hydrolyzable group(s) other than imidato attached to silicon atoms, the presence of a crosslinker is not required. In a typical preparation, the optional catalyst is present in the composition in an amount from 0.01 to 10 parts, preferably from 0.01 to 5 parts and the additional crosslinker, if required, is present in an amount of from 0.1 to 20 parts, preferably in an amount from 0.1 to 10 parts, each by weight, based on 100 parts by weight of siloxane polymer.

In a tenth condensation cure system of the present invention, the siloxane polymer having at least two hydroxysiloxy groups is reacted with a crosslinker, having on average at least two hydrolyzable alkenoxy groups per molecule bonded to silicon atom(s), in the presence of a condensation catalyst. Details of the alkenoxy cure system are described in US-A 5,145,901. The crosslinker may be an alkenoxysilane of the formula (XII) of RₙSi_{X}m₄₋₍ₙ₊ₘ₎, where X therein is a hydrolyzable or condensable group other than alkenoxy and Y therein is alkenoxy (-O-CR'=CR'₂), where n therein is either 0 or 1, m therein is either 0 or 1 and R and R' therein are individually selected from the group consisting of hydrogen atom, monovalent hydrocarbon radical or substituted hydrocarbon radical having 7 or less carbon atoms and functionalized hydrocarbon radicals.

The crosslinker may also be a linear or cyclic siloxane or a silsesquioxane containing alkenoxysiloxy groups and, optionally, an additional crosslinker having on average at least one other hydrolyzable or condensable group per molecule, other than alkenoxy, bound directly to silicon atoms, an organic polymer or resin bearing alkenoxysilyl groups and, optionally, other hydrolyzable or condensable groups bound directly to silicon atom(s). The crosslinker may also be a partial hydrolysis and condensation product (dimer, trimer, tetramer, etc.) of above crosslinkers. In a typical preparation, the catalyst is present in the composition in an amount from 0.01 to 10 parts, preferably from 0.01 to 5 parts and crosslinker is added in an amount of 0.1 to 50 parts, preferably from 1 to 10 parts, each by weight, based on 100 weight parts of siloxane polymer.

In an alternative to the tenth condensation cure system, the siloxane polymer having at least two hydrolyzable alkenoxy groups and, optionally, other hydrolyzable or condensable group(s) other than alkenoxy bound to silicon atom(s), is reacted with a crosslinker having on average at least two hydroxyl groups per molecule bound to silicon atoms, in the presence of a condensation catalyst. In a typical preparation, the catalyst is present in the composition in an amount from 0.01 to 10 parts, preferably from 0.01 to 5 parts and the crosslinker, depending on its nature, is present in an amount of from 0.1 to 50 parts, preferably from 1 to 10 parts, each by weight, based on 100 parts by weight of siloxane polymer.

As a further alternative to the tenth condensation cure system, siloxane polymer having at least two hydrolyzable alkenoxy groups and, optionally, other hydrolyzable or condensable group(s) other than alkenoxy bound to silicon atom(s), is crosslinked, in the presence of a condensation catalyst as described above. In case the siloxane polymer has only two hydrolyzable alkenoxy groups and no further hydrolyzable group(s), the presence of a crosslinker, which on average has at least two hydrolyzable groups per molecule bonded to silicon atom(s), is required. In case the siloxane polymer has more than two hydrolyzable alkenoxy groups or two alkenoxy groups and further hydrolyzable group(s) other than alkenoxy attached to silicon atoms, the presence of a crosslinker is not required. In a typical preparation, the catalyst is present in the composition in an amount from 0.01 to 10 parts, preferably from 0.01 to 5 parts and the additional crosslinker, if required, is present in an amount of from 0.1 to 20 parts, preferably from 0.1 to 10 parts, each by weight, based on 100 parts by weight of siloxane polymer.

In a eleventh condensation cure system of the present invention, the siloxane polymer having at least two hydroxysiloxy groups is reacted with a crosslinker, having on average at least two hydrolyzable isocyanato per molecule groups bonded to silicon atom(s), in the presence of a condensation catalyst. The crosslinker may be a isocyanato organosilane of the formula (XIII) of RₙSi(OR')ₘ(NC(O)₄₋ ₍ₘ₊ₙ₎, as described in DE-A1 2,653,498 and JP-A 57-168,946. R is hydrogen atom, monovalent hydrocarbon radical or substituted hydrocarbon radical having 7 or less carbon atoms, functionalized hydrocarbon radicals, nitrogen compounds of the formula -N=CR"₂, -NR"COR", -NR"₂ or -NR'". R' therein is monovalent hydrocarbon or substituted hydrocarbon radicals having 7 or less carbon atoms. R" therein is either hydrogen atom or monovalent hydrocarbon radicals having 7 or less carbon atoms. R'" therein is cycloalkyl radical, n therein is either 0 or 1 and m therein is either 0, 1 or 2. The crosslinker may also be a linear or cyclic siloxane oligomer containing isocyanatosiloxy groups, a silsesquioxane containing isocyanato and, optionally, an additional crosslinker having on average at least one other hydrolyzable or condensable group per molecule other than isocyanato bound directly to silicon atoms, an organic polymer or resin bearing isocyanatosilyl groups and, optionally, other hydrolyzable or condensable groups bound directly to silicon atom(s). The crosslinker may also be a partial hydrolysis and condensation product (dimer, trimer, tetramer, etc.) of the above crosslinkers. In a typical preparation, the condensation catalyst is present in the composition in an amount of 0.01 to 10 parts, preferably from 0.01 to 5 parts, the crosslinker.is present from 0.1 to 50 parts, preferably from 1 to 10 parts, each by weight, based on 100 weight parts of siloxane polymer.

In an alternative to the eleventh condensation cure system, the siloxane polymer having at least two hydrolyzable isocyanato groups and, optionally, other hydrolyzable or condensable group(s), other than isocyanato, bound to silicon atom(s), is reacted with a crosslinker having, on average, at least two hydroxyl groups per molecule bound to silicon atoms, in the presence of a condensation catalyst. In a typical preparation, the catalyst is present in the composition in an amount from 0.01 to 10 parts, preferably from 0.01 to 5 parts and the crosslinker, depending on its nature, is present in an amount of 0.1 to 50 parts, preferably from 1 to 10 parts, each by weight, based on 100 parts by weight of siloxane polymer.

As a further alternative to the eleventh condensation cure system, siloxane polymer having at least two hydrolyzable isocyanato groups and, optionally, other hydrolyzable or condensable group(s) other than isocyanato bound to silicon atom(s), can be crosslinked, in the presence of a condensation catalyst as described above. In case the siloxane polymer has only two hydrolyzable isocyanato groups and no further hydrolyzable group(s), the presence of a crosslinker, which, on average, has at least two hydrolyzable groups per molecule bonded to silicon atom(s), is required. In case the siloxane polymer has more than two hydrolyzable isocyanato groups or two isocyanato groups and further hydrolyzable group(s) other than isocyanato attached to silicon atoms, the presence of a crosslinker is not required. In a typical preparation, the catalyst is present in the composition in an amount from 0.01 to 10 parts, preferably from 0.01 to 5 parts and the additional crosslinker, if required, is present in an amount of from 0.1 to 20 parts, preferably from 0.1 to 10 parts, each by weight, based on 100 parts by weight of siloxane polymer.

In a twelfth condensation cure system for this invention, the siloxane polymer, having at least two hydroxysiloxy or alkoxysiloxy groups is reacted with a crosslinker, bearing on average at least two reactive silanol groups, in the presence of a condensation catalyst. The crosslinker is selected from the group consisting of silica, silicate, siliconate, silanolate, silanol functional silicone resins and silanol functional organic resins. Siliconates and silanolates useful for this invention are represented by the formulae (XIV and XV) of RSi(O⁻M¹⁺)ₙ(OH)₃₋ₙ and R₂Si(OM¹)ₘ(OH)₂₋ₘ, respectively, where R therein is monovalent hydrocarbon radical, substituted hydrocarbon radical having 7 or less carbon atoms or functionalized hydrocarbon radical. M¹ therein is selected from the group consisting of an alkali metal cation, an ammonium group and a phosphonium group; n therein is an integer or fraction having a value of from 0.1 to 3; and m therein is an integer or fraction having a value of from 0.1 to 2.

The crosslinker may also be a partial condensation product (dimer, trimer, tetramer, etc.) of the above crosslinkers. Crosslinking of hydroxysiloxy endblocked siloxanes with siliconates of formula (XIV) in emulsions is described, for example, in US-A 4,816,506. After the high solids gel consisting of hydroxysiloxy endblocked siloxane, surfactant and water is formed, a crosslinker selected from the group consisting of silica, silicate, siliconate, silanolate, silanol functional organic resin or silicone resin and a condensation catalyst, such as dibutyltindilaurate, are added to the emulsion. This type of crosslinking reaction is well known in the art and is described in US-As 4,221,688; 4,244,849; 4,273,813; 5,004,771 and 3,355,406. In a typical preparation, the condensation catalyst is present in the composition in an amount of 0.01 to 10 parts, preferably from 0.01 to 5 parts and the crosslinker is present in an amount of 0.1 to 50 parts, preferably from 1 to 30 parts, each by weight, based on 100 weight parts of siloxane polymer.

The crosslinker(s) or cure by-product(s) of certain condensation cure systems can act as catalyst or cocatalyst to other condensation cure systems. Examples of such co-catalysis are a mixture of silazane and oximosilane crosslinkers or a silane crosslinker which bears both amino and oximo functionalities, as described in US-As 3,742,004, 3,758,441 and 4,191,817. Both systems are capable of crosslinking hydroxysiloxy functional organic polymer without the presence of a further catalyst. Another example is a silane bearing both amino and alkoxy functionalities, such as in CH₃(C₂H₅O)Si(NHCH₂CH₂CH₂Si(OC₂H₅)₃)₂, which is disclosed in US-A 4,458,055. Another example of such co-catalysis is the condensation reaction between an alkoxysilane and a hydroxysiloxy functional organic polymer or between two alkoxysiloxy functional organic polymers, catalyzed by an acetoxysilane crosslinker in the presence of a primary tin condensation catalyst, as described in US-As 3,293,204 and 4,515,932, as well as "Bifunctional Catalysis in the Condensation of Silanols and Alkoxysilanes" by Hsien-Kun Chu, Robert P. Cross and David I. Crossan, *Journal of Organometallic Chemistry,* 425 (1992), pages 9-17. Combining various condensation cure chemistries, thus, may be advantageous.

The following class of cure systems that do not generate volatile by-products ("tethered leaving groups") is also useful in the practice of the current invention.

In the first non-volatile cure system for this invention, the siloxane polymer has at least two hydroxysiloxy groups and the crosslinker has on average at least two silacycloalkane groups per molecule. The siloxane polymer and the crosslinker are reacted in the presence of a nucleophilic catalyst, such as an amine, a hydroxyl amine, a guanidine, a N-alkylated guanidine, an urea or a N-alkylated urea. The preferred catalyst is a dialkylhydroxylamine. The most preferred catalyst is diethylhydroxylamine. The silacycloalkane cure system is described in detail in US-As Patent Nos. 4,965,367; 4,985,568; 5,001,187; 5,049,688; 5,110,967 or in EP-As 0,423,684 and 0,423,685. The crosslinker can also be a compound bearing silacycloalkane groups -(Si(CH₂)ₙ). The preferred crosslinker is a compound bearing silacyclobutane groups. The silacycloalkane group(s) may be attached to the crosslinker via Si-C, Si-(O-Si)ₙ-Si or Si-(O-Si)ₙ-C bonds, wherein n thereof is a positive integer. The crosslinker may also be a linear or cyclic siloxane containing silacycloalkane radicals, a silsesquioxane containing silacycloalkane radicals, an organic oligomer, polymer or resin bearing silacycloalkane groups directly bound to silicon or carbon atom(s). In a typical preparation, the catalyst is present in the composition in an amount of 0.01 to 10 parts, preferably from 0.01 to 5 parts and the crosslinker is present in an amount of 0.1 to 50 parts, preferably from 1 to 10 parts, each by weight, based on 100 parts by weight of siloxane polymer.

In an alternative to this non-volatile cure system, the siloxane polymer has at least two silacycloalkane groups. The polymer is then reacted in the presence of a nucleophilic catalyst, as described above, with a crosslinker having on average at least two hydroxyl groups per molecule bound to silicon atoms. In a typical preparation, the catalyst is present in the composition in an amount from 0.01 to 10 parts, preferably from 0.01 to 5 parts and the crosslinker, depending on its nature, is present in an amount of 0.1 to 50 parts, preferably from 1 to 10 parts, each by weight, based on 100 parts by weight of siloxane polymer.

In a further alternative to this non-volatile cure system, the siloxane polymer having at least two silacycloalkane groups and, optionally, other hydrolyzable or condensable group(s) other than silacycloalkane bound to silicon atoms, is crosslinked in the presence of a nucleophilic catalyst, as described above. In case the polymer has only two silacycloalkane groups and no further hydrolyzable group(s), the presence of a crosslinker, which on average has at least two hydrolyzable groups per molecule bonded to silicon atom(s), is required. In case the polymer has more than two silacycloalkane groups or two silacycloalkane groups and further hydrolyzable group(s) attached to silicon atoms, the presence of a crosslinker is not required. In a typical preparation, the catalyst is present in the composition in an amount from 0.01 to 10 parts, preferably from 0.01 to 5 parts and the additional crosslinker, if required, is present in an amount of 0.1 to 20 parts, preferably from 0.1 to 10 parts, each by weight, based on 100 parts by weight of siloxane polymer.

In the second non-volatile cure system of the present invention, the siloxane polymer having at least two hydroxysiloxy groups, is reacted with a crosslinker having on average at least two aza-silacycloalkane groups, in the presence of a condensation catalyst. The aza-silacycloalkane cure system is described in detail in US-As 5,136,064; 5,238,988; 5,239,099 and 5,254,645 or WO 94/14820. The crosslinker is a compound bearing azasilacyclopentane groups attached via the silicon or nitrogen atom. The preferred crosslinker is a compound bearing azasilacyclopentane groups. The crosslinker may also be a linear or cyclic siloxane, a silsesquioxane, an organic oligomer, polymer or resin, bearing aza-silacycloalkane radicals. In a typical preparation, the catalyst is present in the composition in an amount of 0.01 to 10 parts, preferably from 0.01 to 5 parts and the crosslinker is present in an amount of 0.1 to 50 parts, preferably from 1 to 10 parts, each by weight, based on 100 parts by weight of siloxane polymer.

In an alternative to the second non-volatile cure system, the siloxane polymer has at least two aza-silacycloalkane groups attached to the polymer either via the silicon or nitrogen atom. The polymer is then reacted in the presence of a condensation catalyst, as described above, with a crosslinker having, on average, at least two hydroxyl groups bound to silicon atoms. In a typical preparation, the catalyst is present in the composition in an amount from 0.01 to 10 parts, preferably from 0.01 to 5 parts and the crosslinker, depending on its nature, is present in an amount from 0.1 to 50 parts, preferably from 1 to 10 parts, each by weight, based on 100 parts by weight of siloxane polymer.

As a further alternative to the second non-volatile cure system, the siloxane polymer having at least two aza-silacycloalkane groups bound to the polymer via either the silicon or nitrogen atom and, optionally, other hydrolyzable or condensable group(s), other than aza-silacycloalkane, bound to silicon atom(s), is crosslinked in the presence of a condensation catalyst, as described above. In case the polymer has only two aza-silacycloalkane groups and no further hydrolyzable group(s) attached to silicon atoms, the presence of a crosslinker, which on average has at least two hydrolyzable groups per molecule bonded to silicon atom(s), is required. In case the polymer has more than two aza-silacycloalkane groups or two aza-silacycloalkane groups and further hydrolyzable group(s) attached to silicon atom(s), the presence of a crosslinker is not required. In a typical preparation, the catalyst is present in the composition in an amount from 0.01 to 10 parts, preferably from 0.01 to 5 parts and the additional crosslinker, if required, is present in an amount of 0.1 to 20 parts, preferably from 0.1 to 10 parts, each by weight, based on 100 parts by weight of siloxane polymer.

Another class of silicon cure systems involves addition (hydrosilylation) reactions between a silicon hydride (Si-H) group and an alkenyl group (-(CH₂)ₙ-CH=CH₂) group. The silicon hydride group may be attached either to the polymer or the crosslinker. The alkenyl group may also be attached either to the polymer or the crosslinker. If the alkenyl group is attached to the crosslinker, the crosslinker may be organic, silicon modified organic or siloxane in nature.

The number of reactive radicals on the polymer and the crosslinker will determine, whether a cured elastomer is obtained. An elastomeric network is formed by the addition cure, if the sum of the reactive radicals on the polymer and the reactive radicals on the crosslinker is at least 5. For example, if the polymer has two alkenyl groups and the crosslinker has three silicon hydride groups, an elastomer is obtained.

The addition cure chemistry requires a catalyst to effect the reaction between polymer and crosslinking compound. Suitable hydrosilylation catalysts are well known in the art. Suitable catalysts employed in the addition reactions (a) to (c) above are group VIII transition metal (noble metal) compounds of the periodic chart. The noble metal catalyst is selected from any of those well known to the art, such as those described in US-A 3,923,705 which specifically shows platinum catalysts. A preferred platinum compound catalyst is a composition consisting essentially of the reaction product of chloroplatinic acid and an organosilicon compound containing terminal aliphatic unsaturation, such as described in US-A 3,419,593. When said noble metal catalysts are used, they are added in an amount from 0.000001 to 0.5, preferably from 0.00001 to 0.002 weight parts, per 100 weight parts of the silicon modified organic polymer.

In the first addition cure system of the present invention, the siloxane polymer bearing alkenyl groups is reacted with a crosslinker, having on average at least two silicon-bonded hydrogen atoms per molecule, the reaction occurring in the presence of a hydrosilylation catalyst. Details of this cure system are taught in US-A 4,248,751. The siloxane polymer contains at least one alkenyl group. However, to obtain sufficient curability, it is desirable that the siloxane polymer also contain at least 1.1, more preferably from 1.5 to 4 reactive alkenyl groups. The silicon hydride crosslinker can be chosen from hydrolyzable silicon hydride, polymeric or oligomeric compounds, containing on average at least two hydrogen-silicon bonds and, optionally, hydrolyzable or condensable groups bound directly to silicon atoms, such as polyorganohydrogensiloxane, alkylhydrogencyclosiloxane and liquid copolymers comprising SiO₂ and/or SiO_{3/2} units and bearing silicon-bonded hydrogen atoms, such as taught in US-A 4,310,678.

The silicon hydride crosslinker can also be chosen from organic polymers and resins bearing Si-H groups. The crosslinker may also be a silsesquioxane containing hydrogen and, optionally, also containing alkoxy groups bound directly to silicon atoms, as described, for example, in US-A 5,047,492. Examples of suitable crosslinkers are trimethylsilyl endblocked polymethylhydrogensiloxane and methylhydrogencyclosiloxane. The SiH functional crosslinker is added in sufficient amount to provide at least one hydrogen atom for each vinyl group in the polydiorganosiloxane polymer. Preferably, an excess of SiH functional crosslinker is provided so that all vinyl groups are reacted. In a typical preparation, the catalyst is present in the composition in an amount of 0.000001 to 0.5 parts, preferably from 0.00001 to 0.002 parts and silicon hydride crosslinker, depending on its nature, is added in an amount of from 0.1 to 10 parts, each by weight, of siloxane polymer.

In an alternative to this addition cure system, the hydrosilylation reaction takes place in the presence of a hydrosilylation catalyst, between a siloxane polymer having silicon-hydrogen bonds and a crosslinker having alkenyl groups attached to silicon or carbon atoms(s). The siloxane polymer contains at least one silicon-hydrogen bond. However, to obtain sufficient curability, it is desirable that the siloxane polymer also contain at least 1.1, more preferably from 1.5 to 4 reactive silicon-hydrogen bonds. The crosslinker has on average at least two alkenyl groups per molecule directly attached to at least one silicon atom and is selected from the group consisting of trisalkenylsilanes, alkenyl functional linear or cyclic siloxanes, liquid copolymers comprising SiO₂ and/or SiO_{3/2} units and bearing silicon-bonded alkenyl groups, silsesquioxane containing alkenyl and optionally hydrolyzable or condensable groups, that do not interfere with the noble metal catalyzed cure and are bound directly to silicon atoms, organic polymers or resins having alkenylsilyl groups and optionally hydrolyzable or condensable silyl groups, that also do not interfere with the noble metal catalyzed cure, bound directly to carbon atom(s) via Si-C bonds or organic oligomers, polymers or resins bearing alkenyl groups. The crosslinker is added to the composition in such an amount as to provide at least one hydrogen atom on the siloxane polymer for each alkenyl radical in the crosslinker. In a typical preparation, the catalyst is present in the composition in an amount of 0.000001 to 0.5 parts, preferably from 0.00001 to 0.002 parts and silicon hydride crosslinker is added, depending on its nature, in an amount of 0.1 to 10 parts, each by weight, of siloxane polymer.

In another class of useful cure systems, the crosslinking between Si-C bonds occurs via free radical reactions. For example, a stabilized emulsion of hydroxysiloxy or trimethylsiloxy endblocked siloxane in water is reacted with siloxane containing sufficient alkenyl substituted siloxane units to facilitate crosslinking using a peroxide or other free radical initiator or high energy radiation, as described in US-A 4,273,634. In a typical preparation, the free radical initiator is present in the composition in an amount of 0.01 to 10 parts by weight of siloxane polymer.

The following classes of miscellaneous organic cure systems are useful to the practice of the claimed invention.

In the first organic cure system of the present invention, the siloxane polymer, bearing at least two carboxyalkylsiloxy groups, is reacted with a crosslinker having on average at least two epoxide groups; the reaction occurs in presence of a catalyst, as disclosed in US-A 4,623,694. The crosslinker can be an epoxide compound selected from the group consisting of diglycidyl ethers of di- and bis-phenols. The catalyst is also selected from the group consisting of (organo)metallic compounds, amino compounds, salts of amino compounds or mixtures of catalysts. In a typical preparation, the catalyst is present in the composition in an amount of 0.01 to 10 parts, preferably from 0.01 to 5 parts and the crosslinker is present in an amount of 0.1 to 100 parts, preferably from 5 to 50 parts, each by weight, based on 100 weight parts of siloxane polymer.

In another organic cure system of this invention, the siloxane polymer bearing at least two primary or secondary aminosiloxy groups is reacted with a crosslinker, having on average at least two carboxylic anhydride groups. The reaction optionally occurs in the presence of an acrylating agent, as disclosed in DE 4,211,256. The crosslinker is either an alkoxysilane, an alkoxysiloxane, an alkoxysiloxy or alkoxysilyl functional resin or a siloxane containing carboxylic anhydride groups. Depending on the number of amino and carboxy groups involved in the reaction, the composition contains in a typical preparation catalyst in an amount of 0.01 to 5 parts, preferably from 0.05 to 2 parts and crosslinker in an amount of 0.1 to 100 parts, preferably from 1 to 50 parts, each by weight, based on 100 weight parts of siloxane polymer.

Fillers may be optionally added to the composition of the invention. Depending on the type of filler under consideration and the intended purpose of the filler addition, the filler may be added to the initial mixture of siloxane polymer, surfactant and water, optionally also containing crosslinker and catalyst and optional formulation ingredients. It may also be added after the initial emulsification step to the high solids gel phase; or it may be added to the silicone latex dispersion after dilution with water. The filler may be added neat (dry) or as a dispersion (slurry) in water, siloxane polymer, polymer/mixture, solvent/polymer mixture, solvent or other suitable media. Fillers may be added for reinforcing or extending (cheapening) the cured elastomer or for achieving special performance characteristics of the wet silicone latex dispersion or the cured elastomer, exemplified by such properties as handling characteristics, electrical conductivity, fire resistance, self-extinguishing features, radiation shielding or required changes in the surface appearance or other characteristics. Any filler which does not react with the silicone emulsion or silicone latex dispersion is suitable.

Fillers added for extending or reinforcing purposes typically have an average particle size below 10 micrometers, preferably below 2 micrometers and are added at 10 to 200 weight parts, preferably 40 to 120 weight parts, per 100 weight parts of siloxane polymer. Examples of such fillers are aluminum oxide, hydrated aluminum hydroxide, diatomaceous earths, magnesium hydroxide, ground quartz, mica, calcium carbonate, clay, barium sulfate, zinc oxide, iron oxide and talcum. If necessary, liquid alkoxy silanes which are soluble in the siloxane polymer may also be added with the filler to compatibilize the filler with the siloxane polymer.

Various pigments, such as carbon black or titanium dioxide, may also be added. Since these fillers are only intended to affect the color of the cured silicone latex elastomer, they are typically added at 0.1 to 20 weight parts, preferably from 0.5 to 10 weight parts, per 100 weight parts of siloxane polymer. Titanium dioxide has been found to be particularly useful as a screening agent for ultraviolet light.

It should be noted that selection and addition to our composition of particular fillers may improve the physical properties of the resulting elastomer, particularly tensile strength, elongation, hardness and heat stability. Precipitated or fumed silicas are used as reinforcing fillers. The silicone latex dispersions of this invention, which are cured with catalysts other than Sn(IV) compounds, are particularly useful because they can be reinforced with colloidal silicas without negatively effecting the shelf-life of the wet latex dispersion and/or the durability of the cured elastomer.

Although common fumed and precipitated silicas can be used, colloidal silicas are much more effective in reinforcing our cured silicone latex elastomers. Aqueous dispersions of fumed or precipitated colloidal silicas are commercially available. Stable dispersions of fumed silica in water are available at a pH varying from 5 to 11. The amount of fumed silica in the dispersion varies from 10 to 30 percent by weight. Such fumed silica dispersions are available from Cabot Corporation under the trademark Cab-o-Sphere (R). These dispersions are stabilized with ammonia, sodium or potassium hydroxide.

The above described dispersions of fumed silica are different from the aqueous sodium, ammonium or aluminum ion stabilized sols of colloidal silica, such as described in US-A 4,221,688. The colloidal silicas sols are commercially available from Nalco Chemical Company (Naperville, Il.). Use of fumed silica dispersions and colloidal silica sols for reinforcement of silicone latex dispersions are claimed in US-As 5,162,429 and 5,321,075.

Elastomers made from silicone latices, stabilized with surfactants which are cured with catalysts other than Sn(IV), do not form species capable of catalyzing siloxane redistribution/degradation reactions, even when exposed to temperatures above 100°C. Moreover, such elastomers also containing ammonium stabilized silicas are heat stable up to temperatures of 200°C. (long-term) and 250°C. (short term). Surprisingly, elastomers made from silicone latex dispersions, containing sodium stabilized silicas, are not heat stable at temperatures above 120°C. (short term) and 150°C. (long-term). Acidic silicas (those containing H+ as a stabilizer), also yield heat stable elastomers. In general, colloidal or dispersed silicas which are not stabilized by Group Ia or IIa elements, yield heat stable elastomers.

It is believed that silicas stabilized with other volatile bases, such as volatile organic amines, should provide similar heat stability of the silicone latex elastomer as achieved with ammonium stabilized colloidal or dispersed silicas. Suitable organic amines are of the formulae (R)₃₋ₓN(H)ₓ, where x= 0, 1, 2 or 3, R is alkyl or aryl group, such as in N(CH₂CH₂OH)₃ or NH(CH₂CH₂OH)₂. The volatile organic amines include cyclohexylamine, triethylamine, dimethylaminomethylpropanol, diethylaminoethanol, aminomethyl propanol, amino butanol, monoethanolamine, monoisopropanolamine, dimethylethanolamine, diethanolamine, aminoethylpropanediol, aminomethylpropanediol, diisopropanolamine, morpholine, tris(hydroxymethyl)aminomethane, triisopropanolamine, triethanolamine, aniline and urea.

Non-siliceous fillers are preferably used in silicone latex dispersions of this invention when cured with Sn(IV) compounds as catalyst, since they do not negatively affect the shelf-life of the wet latex dispersion and/or the durability of the cured elastomer. Precipitated surface-treated calcium carbonates can be used as semi-reinforcing fillers, ground calcium carbonates, either treated or untreated, can also be used as extending fillers.

Fillers which may be used to modify the surface appearance of the cured silicone latex elastomer and/or to improve the workability of the wet latex dispersion include fibers of 0.1 to 100 millimeters in length. The fiber may be selected from the group consisting of natural fibers, regenerated fibers and synthetic fibers. Natural fibers include pulp, cotton, flax, silk and wool. Regenerated fibers are such as rayon. Synthetic fibers include nylon and polyester.

Fillers which may be used to achieve fire retardency or fire resistance of our cured silicone latex elastomer include aluminum hydroxide (trihydrate), non-flammable fibers, ceramic or glass fibers and microspheres and vermiculite, as described in US-A 4,719,251.

Fillers which may be used to achieve electric conductivity of our cured silicone latex elastomer include carbon black, metal coated ceramic spheres or fibers, metal coated glass spheres or fibers, uncoated or metal coated graphite fibers or spheres as disclosed in US-As 4,545,914 and 4,547,312.

The silicone latex dispersion of this invention can also be reinforced with silsesquioxanes in amounts up to 20 weight parts, for instance, a methylsilsesquioxane having the unit formula RSiO_{3/2}, which is prepared in an emulsion. The process of making these silsesquioxanes, having colloidal sized particles, is found in US-A 3,433,780. The silsesquioxanes are employed in the form of colloidal suspensions, which are added to the silicone emulsion (made from siloxane polymer, surfactant and water) or the crosslinked latex (made from siloxane polymer, surfactant, crosslinker, water and, if required, catalyst). Copolymers and blends of the silsesquioxanes can be employed as well as the individual ones and the formula RSiO_{3/2} is intended to include all such materials.

For certain condensation cure chemistries and for compositions in which the catalyst remains active and negatively affects shelf-life of the wet dispersion and/or durability of the cured elastomer, it may be desirable to add compounds in amounts up to 10 weight parts to our claimed composition to deactivate (poison) the catalyst after the cure has sufficiently progressed. In this process, a sufficient "gestation time" of several days needs to be allowed before the catalyst is quenched. Deactivation of Sn(IV) catalysts with alkyl mercaptan, 8-quinolinol, thio glycolic acid and salts of thio glycolic acid has been disclosed in US-A 4,609,486.

For certain condensation cure chemistries and for compositions in which the catalyst remains active and negatively affects shelf-life of the wet dispersion, it may be desirable to add compounds to the instant composition that act as shelf life stabilizers in amounts up to 20 weight parts. Amine compounds, such as diethylamine, hydroxylamine or 2-amino-2-methyl-1-propanol have been found to improve the shelf life (stability of properties) of the wet silicone latex dispersions containing Sn(IV) catalysts and silicas. The preferred shelf life stabilizer is 2-amino-2-methyl-1-propanol, as disclosed in US-As 4,427,811 and 4,608,412.

The silicone latex dispersion of the present invention may also contain additional ingredients to further modify the properties of the latex dispersion or the cured elastomeric products obtained from the latex dispersion. For example, antifoams, dispersants or freeze/thaw stabilizers may be added thereto.

Our silicone latex dispersions can be applied as sealants, putties, molding materials or foams. The evaporation of water from these dispersions normally occur by unattended exposure to the ambient atmosphere. The evaporation may be additionally assisted by a flow of dry air or other gas, either at ambient or elevated temperatures, by infrared heating, micro-waving or a combination of various heating means. Care should be taken when accelerated means are used to evaporate the aqueous phase to assure that the rapidly evolving water vapor does not produce undesired discontinuities in the cured product.

The following examples are presented to further illustrate the compositions of this invention. In the examples, the wet dispersions were cast into films one day after the dispersions were made and the film was allowed to dry for a minimum of seven days prior to testing. Durometer results were obtained by the method described in ASTM C661 "Indentation Hardness of Elastomeric-Type Sealants by Means of a Durometer". Tensile and elongation results were obtained by ASTM D412 "Vulcanized Rubber and Thermoplastic Rubbers and Thermoplastic Elastomers-Tension" using dumbbell specimens with an L dimension equal to 1.3 cm (0.5 inch).

### Example 1

Using parts by weight based on siloxane polymer, 100 parts of 50,000 mm²/s [cs] (110,000 Mw) -OH endblocked polydimethylsiloxane ("PDMS") and 4 parts of a 50/50 by weight mixture of water and Tergitol™ TMN-6 surfactant, an ethoxylated trimethylnonanol, were mixed in a laboratory mixer (Whip Mix™) until a very high solids gel emulsion was formed. The resultant aqueous solution had a viscosity of 0.082 Pa·s at a shearing gradient of 1 sec⁻¹ as measured on a Brookfield™ viscometer (Brookfield Engineering Laboratories, Inc., Stoughten, MA.) The emulsion was diluted with water to 95% silicone polymer solids. This process was repeated with final dilutions of 90, 85, 80, 75 and 70 % silicone polymer solids being prepared. Next, 0.2 part of dibutyltindilaurate (DBTDL) catalyst and 0.8 part of isobutyltrimethoxysilane were mixed into each of these emulsions. The formulations were transferred to a Semkit™ cartridge (Courtaulds Aerospace, Indianapolis, IN) and left to stand overnight. The next day a small amount of each sample was spread out to dry. The extrusion rate was measured by extruding the sample from the Semkit™ through a 0.32 cm (1/8") orifice at a constant pressure of 220.6 kPa (32 psi) and weighing the amount extruded. A tack-free elastomer remained after the evaporation of water.

| % Si Polymer solids | Extrusion rate (grams per minute) |
|---|---|
| 95 | 3.9 |
| 90 | 19.8 |
| 85 | 222.2 |
| 80 | 1228.8 |
| 75 | 4376.1 |
| 70 | 6193.5 |

### Example 2

2 parts of a 50% aqueous solution of sodium lauryl sulfate was mixed into 100 parts of 50,000 mm²/s [cs] (Mw 110,000) -OH endblocked PDMS polymer in the laboratory mixer of Example 1. This emulsion gel was diluted with 20.25 parts of water. Then, 0.42 part of stannous octoate, 0.96 part of chloropropyltrimethoxysilane and 0.52 part of 2-amino-2-methyl-1-propanol (95% solution) were mixed sequentially into the emulsion. This dispersion had good handling properties. Specifically, this dispersion exhibited greater resistance to extrusion and tooling than a 75% solids silicone dispersion prepared from a crosslinked emulsion polymer. It formed a silicone elastomer after water evaporation with a tensile strength of 517.1 kPa (75 psi) and an elongation of 1929%.

### Example 3

11.2 parts of a 50/50 solution of sodium lauryl sulfate and water was added to 100 parts of a 60,000 mPa·s trimethoxysilane endblocked PDMS polymer in the same laboratory mixer as above. The ingredients were mixed until a high solids emulsion gel was formed. An additional 13 parts of water and 0.5 part of stannous octoate were mixed in. This dispersion had good handling properties and formed a silicone elastomer after water evaporation. Specifically, this dispersion exhibited greater resistance to extrusion and tooling than a 75% solids silicone dispersion prepared from a crosslinked silicone emulsion polymer.

### Example 4

Herein, 6.2 parts of Makon™ 10, an alkylphenoxy polyoxyethylene ethanol nonionic surfactant and 3.0 parts of water were added to 100 parts of 50,000 mm²/s [cs] (Mw 110,000) -OH endblocked PDMS polymer. This aqueous solution had a viscosity of 5.35 Pa·s at a shearing gradient of 1 sec⁻¹ as measured on the viscometer of Example 1. In the above laboratory mixer, these ingredients were mixed until a very high solids emulsion gel was formed. This gel was diluted with 9.10 parts water. 0.58 part stannous octoate and 0.92 part chloropropyltrimethoxysilane were mixed into the emulsion. 2.0 parts of 15% NH₄OH water solution was added after no more than a 10 minute gestation time. This emulsion had good handling properties and formed a silicone elastomer after water evaporation. Specifically, this dispersion exhibited greater resistance to extrusion and tooling than a 75% solids silicone dispersion prepared from a crosslinked silicone emulsion polymer.

### Example 5

Next, 0.84 part isobutyltrimethoxysilane, 1.0 part dibutyltindiacetate and 100 parts of 50,000 mm²/s [cs] (Mw 110,000) -OH endblocked PDMS polymer were mixed together in the above laboratory mixer. 3.04 parts water and 6.10 parts of Makon™ 10 nonionic surfactant were mixed into the polymer until a very high solids emulsion gel was formed. The product solution had a viscosity of 5.35 Pa™s at a shearing gradient of 1 sec⁻¹ as measured on the same viscometer described above. This gel was diluted with 7.08 parts water. This emulsion had good handling properties and formed a silicone elastomer after water evaporation. Specifically, this dispersion exhibited greater resistance to extrusion and tooling than a 75% solid silicone dispersion prepared from a crosslinked silicone emulsion polymer.

### Example 6

100 parts of 50,000 mm²/s [cs] (110,000 Mw) -OH endblocked PDMS polymer, 0.8 part isobutyltrimethoxysilane and 0.41 part DBTDL were mixed together in the same laboratory mixer. 6.00 parts Makon™ 10 nonionic surfactant and 3.0 parts water were mixed in until a very high solids gel emulsion was formed. The resultant aqueous solution had a viscosity of 5.35 Pa·s at a shearing gradient of 1 sec⁻¹ as measured on the viscometer above. This emulsion had good handling properties and dried to a silicone elastomer after water evaporation. Specifically, this dispersion exhibited greater resistance to extrusion and tooling than a 75% solids silicone dispersion prepared from a crosslinked silicone emulsion polymer.

### Example 7

Herein, 100 parts of 50,000 mm²/s [cs] (110,000 Mw) -OH endblocked PDMS polymer, 0.8 part isobutyltrimethoxysilane and 0.41 part DBTDL were mixed together in the laboratory mixer above. 6.00 parts Makon™ 10 nonionic surfactant and 3.0 parts water were mixed in until a very high solids gel emulsion was formed. The aqueous Makon™ 10 solution had a viscosity of 5.35 Pa·s at a shearing gradient of 1 sec⁻¹ on the above viscometer. The gel was diluted with 20.87 parts of water to yield an 80% silicone solids dispersion. This emulsion had good handling properties and dried to a silicone elastomer after water evaporation. Specifically, this dispersion exhibited greater resistance to extrusion and tooling than a crosslinked 75% solids silicone dispersion prepared from a crosslinked silicone emulsion polymer.

### Example 8

100 parts of the following silanol endblocked PDMS polymers were used individually to prepare sealant formulations: Huls™ PS344.5 (8000 mm²/s [cs], 58,000 Mw), Huls™ PS345.5 (18,000 mm²/s [cs], 77,000 Mw), Huls™ PS347.5 (50,000 mm²/s [cs], 110,000 Mw), Huls™ PS348.7 (125,000-175,000 mm²/s [cs], 150,000 Mw). 0.8 part of isobutyltrimethoxysilane was added to the polymer and mixed in the above laboratory mixer. 4.0 parts of Tergitol™ TMN-6 nonionic surfactant and 3.0 parts of water were mixed with the polymer until a clear gel emulsion was formed. This emulsion was diluted with 17.1 parts water. DBTDL was added at a level of 0.4 part to the emulsion to effect crosslinking of the emulsion particles. All the emulsions had good handling properties and dried to a silicone elastomer after water evaporation. Specifically, these dispersions exhibited greater resistance to extrusion and tooling than a 75% solids silicone dispersion prepared from a crosslinked silicone emulsion polymer.

### Example 9

Next, 100 parts of 50,000 mm²/s [cs] silanol endblocked PDMS polymer and 4.0 parts of a 45% aqueous solution of Tergitol™ TMN-6 were then mixed until a very high solids emulsion gel was formed. The product solution had a viscosity of 0.082 Pa·s at a shearing gradient of 1 sec⁻¹ as measured on the above viscometer. This emulsion gel was diluted to an 80% silicone solids emulsion. Thereafter, 0.5 part of DBTDL and 1.0 part of dimethylmethylhydrogen copolymer oligomer were mixed into the emulsion.

This formulation formed a tack free silicone elastomer after water evaporation. It had a tensile strength of 275.8 kPa (40 psi), an elongation of 922 and a Shore A durometer of 13.

### Example 10

100 parts of 50,000 mm²/s [cs] silanol endblocked PDMS polymer and 4.0 parts of a 45% aqueous solution of Tergitol™ TMN-6 were mixed until a very high solids emulsion gel was formed. The resultant aqueous solution had a viscosity of 0.082 Pa·s at a shearing gradient of 1 sec⁻¹ as measured on the above viscometer. This emulsion gel was diluted to an 80% silicone solids emulsion. 0.5 part of diethylhydroxylamine and 1.0 part of dimethylmethylhydrogen copolymer oligomer were mixed into the emulsion.

This formulation was extruded after 3 days gestation and formed a tacky silicone elastomer after standard curing conditions. It had a tensile strength of 68.95 kPa (10 psi) and an elongation of 2203. The elastomer was too soft for a Shore A durometer measurement.

### Example 11

Thereafter, 100 parts of 50,000 mm²/s [cs] silanol endblocked PDMS polymer and 4.0 parts of a 45% aqueous solution of Tergitol™ TMN-6 were mixed until a very high solids emulsion gel was formed. The formed aqueous solution had a viscosity of 0.082 Pa·s at a shearing gradient of 1 sec⁻¹ as measured on the above viscometer. This emulsion gel was diluted to an 80% silicone solids emulsion. 0.5 part of DBTDL and 1.0 part of vinyltris(methylethylketoxime)silane were mixed into the emulsion.

This formulation formed a tack free silicone elastomer after water evaporation. It had a tensile strength of 227.5 kPa (33 psi), an elongation of 976 and a Shore A durometer of 3.

### Example 12

100 parts of 60,000 mm²/s [cs] trimethoxysilyl-endblocked PDMS polymer and 4.0 parts of a 45% aqueous solution of Tergitol™ TMN-6 were mixed until a very high solids emulsion gel was formed. The product aqueous solution had a viscosity of 0.082 Pa·s at a shearing gradient of 1 sec⁻¹ as measured on the viscometer. This emulsion gel was diluted to an 80% silicone solids emulsion. 0.5 part of TYZOR™ DC (a chelated titanate from DuPont, Wilmington, DE) were mixed into the emulsion.

This formulation formed a tack free silicone elastomer after water evaporation. It had a tensile strength of 303.4 kPa (44 psi), an elongation of 583 and a Shore A durometer of 6.

### Example 13

Next, 100 parts of 50,000 mm²/s [cs] silanol endblocked PDMS polymer and 4.0 parts of a 45% aqueous solution of Tergitol™ TMN-6 were mixed until a very high solids emulsion gel was formed. The resultant aqueous solution had a viscosity of 0.082 Pa·s at a shearing gradient of 1 sec⁻¹ as measured on the above viscometer. This emulsion gel was diluted to an 80% silicone solids emulsion. 0.5 part of DBTDL and 1.0 part of methyltriacetoxysilane were mixed into the emulsion.

This formulation formed a tack free silicone elastomer after water evaporation. It had a tensile strength of 530.9 kPa (77 psi), an elongation of 1042 and a Shore A durometer of 6.

### Example 14

Then, 100 parts of 50,000 mm²/s [cs] silanol endblocked PDMS polymer and 4.0 parts of a 45% aqueous solution of Tergitol™ TMN-6 were mixed until a very high solids emulsion gel was formed. The final aqueous solution had a viscosity of 0.082 Pa·s at a shearing gradient of 1 sec⁻¹ as measured on the above viscometer. This emulsion gel was diluted to an 80% silicone solids emulsion. 0.5 part of DBTDL and 1.0 part of vinyltriisopropenoxysilane were mixed into the emulsion.

This formulation formed a tack free silicone elastomer after water evaporation. It had a tensile strength of 330.95 kPa (48 psi), an elongation of 553 and a Shore A durometer of 10.

### Example 15

100 parts of 50,000 mm²/s [cs] silanol endblocked PDMS polymer and 4.0 parts of a 45% aqueous solution of Tergitol™ TMN-6 were mixed until a very high solids emulsion gel was formed. The formed aqueous solution had a viscosity of 0.082 Pa·s at a shearing gradient of 1 sec⁻¹ as measured on the above viscometer. This emulsion gel was diluted to an 80% silicone solids emulsion. 0.5 part of DBTDL and 1.0 part of tris(dimethylamino)methylsilane were mixed into the emulsion.

This formulation formed a tack free silicone elastomer after water evaporation. It had a tensile strength of 255.1 kPa (37 psi), an elongation of 874 and a Shore A durometer of 5.

### Example 16

### Emulsion A:

In a laboratory mixer (Hauschild™), 0.3 part of a platinum/ vinylterminated siloxane complex (containing 0.6% platinum) were mixed into 100 parts of a 55,000 mm²/s [cs] vinyl-terminated PDMS containing 0.088 vinyl functionality. 4 parts of a 45% solids aqueous solution of Tergitol™ TMN-6 were then mixed in until a 94% silicone solids, oil in water, emulsion gel was formed. This emulsion gel was diluted to an 80% silicone solids emulsion. The final aqueous solution had a viscosity of 0.082 Pa·s at a shearing gradient of 1 sec⁻¹ as measured on the above viscometer.

### Emulsion B:

In the laboratory mixer used above for Emulsion A, 1.5 parts of dimethylmethylhydrogen siloxane (5 mm²/s [cs] viscosity, containing 0.76% Si-H) were mixed into 100 parts of a 55,000 mm²/s [cs] vinyl terminated PDMS containing 0.088 vinyl functionality. 4 parts of a 45% solids aqueous solution of Tergitol™ TMN-6 were then mixed in until a 94% silicone solids, oil in water, emulsion gel was formed. This emulsion gel was diluted to an 80% silicone solids emulsion. The product aqueous solution had a viscosity of 0.082 Pa·s at a shearing gradient of 1 sec⁻¹ as measured on the above viscometer.

### Emulsion C:

Equal parts of Emulsion A and Emulsion B were mixed together in the same laboratory mixer.

Emulsion C, after 4 days, formed a tack free silicone elastomer after water evaporation.

### Example 17

100 parts of 60,000 mm²/s [cs] trimethoxysilyl-endblocked PDMS polymer and 4.0 parts of a 45% aqueous solution of Tergitol™ TMN-6 were mixed until a very high solids emulsion gel was formed. The resultant aqueous solution had a viscosity of 0.082 Pa·s at a shearing gradient of 1 sec⁻¹ as measured on the above viscometer. This emulsion gel was diluted to an 80% silicone solids emulsion. 0.54 part of hexylamine and 0.72 part of octanoic acid were mixed into the emulsion.

This formulation formed a tack free silicone elastomer after water evaporation.

### Example 18

100 parts of 50,000 mm²/s [cs] silanol-endblocked PDMS polymer and 4.0 parts of a 45% aqueous solution of Tergitol™ TMN-6 were mixed until a very high solids emulsion gel was formed. The formed aqueous solution had a viscosity of 0.082 Pa·s at a shearing gradient of 1 sec⁻¹ as measured on the above viscometer. This emulsion gel was diluted to an 81% silicone solids emulsion. 0.2 part of stannous octoate and 2.00 parts of 50% solution of vinytrimethoxysilane in pH 4 water(prehydrolyzed vinyltrimethoxysilane) were mixed into the emulsion.

This formulation formed a tack free silicone elastomer after water evaporation. The tensile strength was 579.2 kPa (84 psi), the elongation was 1733 and the Shore A durometer was 2.

## Claims

1. A composition comprising a silicone latex free of rheology modifiers having a plurality of crosslinked polysiloxane particles, wherein said silicone latex has at least 75% silicone content by weight and said silicone latex comprises (a) a crosslinked product of (i) 100 weight parts of a siloxane polymer or polymer mixture having a viscosity of between 5000 and 500,000 mPa·s at 25°C., and (ii) up to 100 weight parts of crosslinker, the siloxane polymer or polymer mixture having at least one polymer species of the following Formula (I):
X₃₋ₙRₙ-YO-(R¹ ₂SiO)_{z}-Y-RₙX₃₋ₙ
where n is 0, 1, 2 or 3 and z is an integer from 500 to 5000, X is selected from hydrogen atom, a vinyl group, a hydroxyl group and any condensable or hydrolyzable group, Y is a silicon atom or a Si-(CH₂)ₘ-SiR¹₂ group, where m is 1 to 8, R is individually selected from the group consisting of hydrogen atom, aliphatic, alkyl, aminoalkyl, polyaminoalkyl, epoxyalkyl, alkenyl or aromatic groups and R¹ is individually selected from the group consisting of X, hydrogen atom, aliphatic, alkyl, alkenyl and aromatic aryl groups, (b) 0.5 to 10 weight parts of surfactant, (c) 0.5 to 200 weight parts of water and (d) up to 10 weight parts of catalyst.

2. A method of making a silicone latex having a plurality of crosslinked polysiloxane particles, comprising the steps of forming a mixture comprising (a) 100 weight parts siloxane polymer or polymer mixture having a viscosity of between 5000 mPa·s and 500,000 mPa·s at 25°C., the siloxane polymer or polymer mixture having at least one polymer species of the following Formula (I):
X₃₋ₙRₙ-YO-(R¹ ₂SiO)_{z}-Y-RₙX₃₋ₙ
where n is 0, 1, 2 or 3 and z is an integer from 500 to 5000, X is selected from hydrogen atom, a vinyl group, a hydroxyl group and any condensable or hydrolyzable group, Y is a silicon atom or a Si-(CH₂)ₘ-SiR¹₂ group, where m is 1 to 8, R is individually selected from the group consisting of hydrogen atom, aliphatic, alkyl, aminoalkyl, polyaminoalkyl, epoxyalkyl, alkenyl or aryl aromatic groups and R¹ is individually selected from the group consisting of X, hydrogen atom, aliphatic, alkyl, alkenyl and aryl aromatic groups, (b) 0.5 to 10 weight parts of a surfactant, (c) 0.5 to 200 weight parts water, emulsifying the mixture into a gel phase having a silicone polymer content of at least 85% by weight; diluting the emulsion with further water to a silicon content of at least 75% by weight, adding up to 10 weight parts of catalyst either before or after the emulsification or before or after the dilution; and adding up to 100 weight parts crosslinker either before or after the emulsification or before or after the dilution.

3. The method of claim 2 wherein the siloxane polymer or polymer mixture includes 1 to 50 weight parts of liquid, branched methylpolysiloxane polymers comprising (CH₃)₃Si_{1/2}, (CH₃)₂SiO and CH₃SiO_{3/2} units and containing from 0.1 to 8% hydroxy groups.

4. The method of claim 2 wherein the siloxane polymer or polymer mixture includes 1 to 50 weight parts of branched methylsiloxane polymeric resins comprising (CH₃)₃Si_{1/2}, (CH₃)₂SiO, CH₃SiO_{3/2} and SiO₂ units and containing from 0.1 to 8% hydroxyl groups.

5. The method of claim 2 wherein the siloxane polymer or polymer mixture includes 1 to 100 weight parts of a compatible organic solvent.

6. The method of claim 2 comprising the additional step of adding up to 200 weight parts filler.

7. The method of claim 2 comprising the additional step of adding up to 20 weight parts adhesion promoter.

8. The method of claim 2 comprising the additional step of adding up to 20 weight parts stabilizer.

9. The method of claim 2 comprising the additional step of adding up to 20 weight parts of an silsesquioxane resin suspension.

10. The method of claim 2 comprising the additional step of adding up to 10 weight parts of a catalyst deactivator.

11. The method of claim 2 wherein the siloxane polymer has at least two hydroxyl, condensable or hydrolyzable groups, the crosslinker has, on average, at least two silicon hydrogen bonds and the catalyst is selected from the group consisting of noble metal complexes, organic acid metal salts, titanic acid esters, amino compounds and their salts and mixtures thereof.

12. The method of claim 2 wherein the siloxane polymer has at least two silicon-hydrogen bonds, the composition contains a crosslinker which has, on average, at least two hydroxyl, condensable or hydrolyzable groups per molecule and a condensation catalyst selected from the group consisting of noble metal complexes, organic acid metal salts, titanic acid esters, amino compounds and their salts and mixtures thereof.

13. The method of claim 2 wherein the siloxane polymer has at least two alkenyl groups per molecule bonded to silicon atom and the crosslinker has, an average of at least two silicon-bonded hydrogen atoms, the catalyst is a noble metal catalyst and the crosslinker is a silicon hydride crosslinker present in a amount sufficient to provide at least one hydrogen atom for each vinyl group in the siloxane polymer.

14. The method of claim 2 wherein the siloxane polymer has at least two hydrogen-silicon bonds, the crosslinker has, on average, at least two alkenyl groups per molecule directly attached to at least one silicon atom and the catalyst is a noble metal catalyst.

15. The method of claim 2 wherein the siloxane polymer has at least two carboxyalkylsiloxy groups, the crosslinker is an epoxide compound selected from the group consisting of diglycidyl ethers of di- and bis-phenols and the catalyst is selected from the group consisting of (organo)metallic compounds, amino compounds, salts of amino compounds or mixtures thereof.

16. The method of claim 2 wherein the siloxane polymer has at least two hydroxysiloxy groups and the composition further has at least one crosslinker having on average at least two silacycloalkane groups per molecule and a nucleophilic catalyst.

17. The method of claim 2 wherein the siloxane polymer has at least two silacycloalkane groups and the composition further includes a crosslinker having on average at least two hydroxyl groups per molecule and a nucleophilic catalyst.

18. The method of claim 2 wherein the siloxane polymer has at least two silacycloalkane groups and, the composition further has a nucleophilic catalyst and optionally, a crosslinker having on average at least two hydrolyzable groups per molecule.

19. The method of claim 2 wherein the siloxane polymer has at least two hydroxysiloxy groups and the composition further has at least one crosslinker having on average at least two aza-silacycloalkane groups per molecule and a condensation catalyst.

20. The method of claim 2 wherein the siloxane polymer has at least two aza-silacycloalkane groups and the composition further includes a crosslinker having on average at least two hydroxyl groups per molecule and a condensation catalyst.

21. The method of claim 2 wherein the siloxane polymer has at least two aza-silacycloalkane groups and, the composition further has a condensation catalyst and optionally, a crosslinker having on average at least two hydrolyzable groups per molecule.

22. The method of claim 2 wherein the siloxane polymer has at least two primary or secondary aminosiloxy groups and the composition further contains an optional acrylating agent and the crosslinker contains on average at least two carboxylic anhydride groups and is selected from the group consisting of alkoxysilane, alkoxysiloxane, alkoxysiloxy functional resin, alkoxysilyl functional resin and a siloxane containing carboxylic anhydride groups.

23. The method of claim 2 wherein the siloxane polymer has at least two hydroxysiloxy or alkoxysiloxy groups, a condensation catalyst and a crosslinker containing on average, at least two reactive silanol groups and where the crosslinker is selected from the group consisting of
a. silica,
b. silicate,
c. siliconate,
d. silanolate,
e. silanol functional silicone resins,
f. silanol functional organic resins, and
g. partial condensation products thereof.

24. The method of claim 6 wherein said filler is selected from the group consisting of colloidal silica, fumed silica, diatomaceous earth, ground quartz, calcium carbonate, carbon black, titanium dioxide, magnesium hydroxide, clay, aluminum oxide, hydrated alumina, expanded vermiculite, zinc oxide, mica, talc, iron oxide, barium sulfate, slaked lime and mixtures thereof.

25. The method of claim 6 wherein the filler is selected from the group consisting of natural fibers, regenerated fibers and synthetic fibers.

26. The method of claim 7 wherein the filler is selected from the group consisting of aluminum hydroxide (trihydrate), non-flammable fibers, ceramic or glass fibers or microspheres and vermiculite.

27. The method of claim 7 wherein the filler is selected from the group consisting of carbon black, metal coated ceramic spheres or fibers, metal coated glass spheres or fibers, uncoated or metal coated graphite fibers or spheres.

28. The method of claim 9 wherein the stabilizer is an organic amine composed of carbon, hydrogen and nitrogen atoms or carbon, hydrogen, nitrogen and oxygen atoms, said organic amine being soluble in the amount of water present in the emulsion.
